# FASCICULE DE BREVET EUROPEEN

(11) **EP 2 295 961 B1**
(45) Date de publication et mention de la délivrance du brevet: **11.10.2017**
(21) Numéro de dépôt: 10176283.9
(22) Date de dépôt: 10.09.2010
(51) Int. Cl.: G01N 30/04, G01N 30/30, G01N 30/88

(54) **Dispositif de préparation et d'injection d'échantillon**
Vorrichtung zur Präparation und Aufgabe einer Probe
Device for preparing and injecting a sample

(30) Priorité: 11.09.2009 FR 0956237
(43) Date de publication de la demande: 16.03.2011
(73) Titulaire: Centre National d'Etudes Spatiales (C.N.E.S.), 75001 Paris (FR)
(72) Inventeur: BUCH, Arnaud, 75019, PARIS (FR); STERNBERG, Robert, 94230, THIAIS (FR); CHAZANOEL, Pascale, 31280, DREMIL-LAFAGE (FR)
(74) Mandataire: Novagraaf Technologies

(56) Documents cités:
- US-A- 5 310 681
- US-A- 5 611 846
- US-A- 5 808 178
- US-A1- 2005 063 865
- US-A1- 2005 284 209
- US-A1- 2009 151 426
- "A new extraction technique for in situ analyses of amino and carboxylic acids on Mars by gas chromatography mass spectrometry" In: BUCH A ET AL: 2006, PLANETARY AND SPACE SCIENCE ELSEVIER UK LNKD- DOI:10.1016/J.PSS.2006.05.041, VOL. 54, NR. 15, PAGE(S) 1592 - 1599 , XP002579337 ISSN: 0032-0633 , pages 12-1599 * abrégé *

## Description

### Domaine technique

La présente invention se rapporte à un dispositif de préparation et d'injection d'échantillon permettant de préparer un échantillon et d'injecter dans un instrument d'analyse les molécules organiques contenues dans cet échantillon. La présente invention se rapporte également à un système d'analyse d'échantillon équipé d'un tel dispositif.

Le dispositif de la présente invention permet notamment d'extraire, de fonctionnaliser, de volatiliser et d'injecter de façon ponctuelle les molécules organiques d'un échantillon dans un instrument d'analyse afin de les analyser.

Le dispositif de la présente invention est utilisable dans tous les domaines de l'analyse chimique de molécules organiques contenues dans un échantillon solide, liquide ou gazeux, par exemple dans l'industrie alimentaire, l'industrie agronomique, l'industrie du parfum, l'industrie cosmétique, l'industrie pharmaceutique, l'analyse de fluides biologiques ou la recherche en général. Le dispositif de la présente invention peut également être utilisé pour l'analyse de sols terrestres ou extraterrestres, par exemple dans les domaines de l'agriculture, de la géologie, de l'environnement, de l'agroalimentaire ou encore de l'exobiologie.

Dans la description ci-dessous, les références entre parenthèses **(réf x)** renvoient à la liste des références présentée après les exemples.

### Etat de la technique

L'analyse de molécules organiques, volatiles ou non, contenues dans un échantillon solide, liquide ou gazeux présente un intérêt dans de nombreux domaines. Par exemple, elle permet de détecter et de caractériser des composés contaminants traces présents dans des échantillons alimentaires, comme par exemple des pesticides ou encore des bactéries. Elle permet également de détecter et de caractériser des traces de drogues, de produits dopants ou de produits polluants dans des échantillons de sang ou d'urines. L'analyse chimique d'échantillons présente également un intérêt pour le suivi de la qualité d'échantillons cosmétiques ou pharmaceutiques en identifiant des molécules traces indésirables ou polluantes, ou des dérivés de produits secondaires issus par exemple de procédés de fabrication ou de mécanismes de décomposition de ces échantillons.

Par ailleurs, l'analyse d'échantillons de sols permet de mesurer la contamination ou la pollution de sols, d'évaluer l'impact de pratiques culturales, d'étudier le rôle des matières organiques, la fertilité ou le fonctionnement d'un sol, etc. En outre, ces informations peuvent permettre de préserver les ressources sols, de favoriser l'entretien ou la restauration de fonctions essentielles du sol, etc.

L'analyse de sols présente également un intérêt croissant dans le domaine de l'exobiologie, qui inclut l'étude de l'origine, de l'évolution et de la distribution de la vie dans l'univers, y compris la Terre, la recherche de traces d'activités biologiques et l'étude de la chimie organique dans les milieux extraterrestres.

L'analyse de molécules organiques contenues dans un échantillon implique des techniques qui permettent d'extraire, de séparer, d'identifier et de quantifier les espèces moléculaires organiques et inorganiques présentes dans les échantillons prélevés. Ainsi, l'analyse de ces molécules nécessite généralement des techniques séparatives, comme par exemple la chromatographie en phase gazeuse (CPG) couplée ou non à la spectrométrie de masse (SM).

Ainsi, ces techniques nécessitent des étapes préalables de préparation et/ou de traitement de l'échantillon, afin d'une part d'extraire les molécules organiques qu'il contient et d'autre part de transformer chimiquement et/ou physiquement ces molécules organiques afin de les rendre détectables et analysables par les instruments d'analyse couramment utilisés.

Généralement, les méthodes d'extraction usuelles, par exemple les extractions liquide-liquide ou solide-liquide, sont longues et laborieuses. En outre, elles nécessitent des temps d'extraction longs dans des solvants à températures élevées, ce qui peut entraîner la dégradation de certaines molécules. De plus, elles ne sont pas toujours efficaces et la variabilité des rendements d'extractions ne permet pas toujours d'avoir des résultats d'analyse fiables et reproductibles. Par ailleurs, les méthodes d'extraction font appel à des dispositifs coûteux, encombrant et/ou difficiles à mettre en oeuvre sur le site de prélèvement de l'échantillon, comme par exemple un appareil de soxhlet ou un dispositif d'extraction en phase supercritique. Enfin, les méthodes d'extraction usuelles sont généralement utilisées pour des quantités relativement importantes d'échantillons et ne sont pas adaptées pour des échantillons de faibles masses ou pour l'extraction de molécules présentes à l'état de traces dans l'échantillon.

Une fois les molécules extraites, elles doivent généralement être transformées de façon à être détectables et analysables par les instruments d'analyse couramment utilisés. La CPG nécessite notamment que les molécules à analyser soient volatilisées.

Pour cela, des injecteurs sont généralement utilisés en amont de l'instrument d'analyse. La plupart de ces dispositifs permettent en effet de vaporiser les molécules organiques d'un échantillon liquide et de les introduire dans l'instrument d'analyse.

Cependant, ces injecteurs ne sont généralement pas prévus pour des échantillons solides ou liquides dans leur forme naturelle, qui ne peuvent pas être injectés directement dans l'instrument d'analyse. Par exemple, ils ne permettent pas d'extraire les molécules organiques d'échantillons solides.

De plus, l'introduction directe de certains échantillons, comme par exemple des fluides biologiques, conduit à la vaporisation de certaines molécules tandis que d'autres restent sous forme de dépôts ou de résidus qui peuvent boucher l'injecteur ou l'instrument d'analyse.

En outre, la plupart de ces injecteurs permettent d'introduire seulement les molécules organiques volatiles dans l'instrument d'analyse, ce qui ne constitue souvent qu'une partie des molécules organiques contenues dans les échantillons liquides ou solides, de sorte que l'analyse est incomplète.

Afin de permettre l'analyse de molécules non volatiles, certains injecteurs comprennent un système de pyrolyse pour transformer chimiquement et/ou physiquement les molécules organiques susceptibles d'être présentes dans un échantillon. En effet, la pyrolyse est une transformation chimique qui conduit à la décomposition des molécules organiques en fragments généralement plus volatils.

On peut citer par exemple le dispositif décrit dans le document Mowry Curtis et al., Proceeding of SPIE (2001), Vol. 4575, pages 83-90 (réf 1). Ce dispositif comprend un micro-pyrolyseur constitué d'un substrat sur wafer de silicium comportant une membrane de nitrure de silicium circulaire chauffée par un élément résistif de platine. Le pyrolyseur est couplé à un spectromètre de masse au moyen d'un capillaire direct. Ce dispositif permet la détection rapide et l'identification de bactéries. Il est conçu pour analyser de la matière humide (échantillon bactérien) et volatiliser des acides gras.

Cependant, la pyrolyse est une transformation qui engendre la dégradation des molécules et conduit à la dénaturation de certaines propriétés physiques et chimiques des molécules cibles, comme par exemple la chiralité ou l'asymétrie. En outre, l'interprétation de cette méthode est complexe et pose des problèmes pour l'identification des molécules initiales à partir de leurs nombreux fragments de pyrolyse.

Des dispositifs pour la préparation et l'injection d'un échantillon sont connus de US5808178A (ROUNBEHLER DAVID P ET AL, 15-09-1998) et US 2005/063865A1 (BONNE ULRICH ET AL, 24-03-2005).

Il existe donc un réel besoin de disposer d'un dispositif de préparation et d'injection d'échantillon en vue de l'analyse chimique des molécules qu'il contient, palliant ces défauts, inconvénients et obstacles de l'art antérieur.

En particulier, il existe un réel besoin de disposer d'un dispositif adapté à l'analyse d'un échantillon brut, sous forme solide, liquide ou gazeuse, et permettant l'analyse de l'ensemble des molécules volatiles et non-volatiles présentes dans l'échantillon à l'état de traces ou non.

En outre, il existe un réel besoin de disposer d'un dispositif de préparation et d'injection d'échantillon permettant de s'affranchir d'étapes de préparation préalables laborieuses et coûteuses en temps et en matériel. En particulier, il existe un réel besoin de disposer d'un dispositif permettant de limiter le contact avec le milieu extérieur pendant toute la durée de l'analyse de l'échantillon, à partir du traitement de l'échantillon brut jusqu'à l'injection des molécules organiques qu'il contient, évitant l'éventuelle contamination de l'échantillon et/ou la perte de molécules contenues dans l'échantillon lors des différentes étapes d'extraction, de traitement et de transfert.

En outre, il existe un réel besoin de disposer d'un dispositif compact et maniable, permettant à la fois d'extraire et de transformer l'ensemble des molécules volatiles et non-volatiles d'un échantillon de façon rapide, quantitative, sans dénaturation ou dégradation des molécules et en un minimum d'étapes, en vue de les introduire dans un instrument d'analyse.

En particulier, il existe un réel besoin de disposer d'un dispositif permettant d'introduire efficacement et sans perte l'ensemble des molécules volatiles et non-volatiles d'un échantillon dans l'instrument d'analyse, de façon ponctuelle et focalisée permettant d'optimiser la précision, la reproductibilité, la sensibilité, la qualité et l'interprétation des analyses.

### Description de l'invention

La présente invention a précisément pour but de répondre à ces besoins et inconvénients de l'art antérieur en proposant un dispositif de préparation et d'injection d'échantillon, transportable sur un site de mesure, permettant une transformation de l'échantillon et l'injection des molécules organiques qu'il contient dans un instrument d'analyse, visant à permettre son analyse complète.

A cet effet, l'invention est définie par les revendications et propose un dispositif de préparation et d'injection d'un échantillon (1) (DPIE) comprenant :
(a) un compartiment de préparation d'échantillon (2a) comprenant :
   (i) une chambre de préparation (3a) étanche présentant :
      - un moyen d'introduction de l'échantillon (9),
      - au moins une entrée (13a) et au moins une sortie (10) étanches permettant la circulation d'un gaz de balayage au travers de ladite chambre de préparation (3a) ;
   (ii) un moyen de chauffage (4a) de ladite chambre de préparation (3a) ;
   (iii) un moyen de refroidissement (5a) de ladite chambre de préparation (3a) ;
   (iv) un moyen étanche d'introduction d'une substance liquide dans la chambre de préparation (3a) connecté à au moins un réservoir destiné à contenir une substance liquide ; et
(b) un compartiment d'injection (2b) comprenant :
   (i) une chambre de focalisation (3b) étanche présentant au moins une entrée (11) étanche connectée à la sortie (10) de la chambre de préparation (3a) et au moins une sortie (12) étanche permettant la circulation dudit gaz de balayage au travers de ladite chambre (3b) ;
   (ii) un moyen de chauffage (4b) de ladite chambre de focalisation (3b) ;
   (iii) un moyen de refroidissement (5b) de ladite chambre de focalisation (3b) ;
(c) une vanne (6) située entre la sortie (10) de la chambre de préparation (3a) et l'entrée (11) de la chambre de focalisation (3b) ; et
(d) des moyens de commande (7) et de contrôle (8) de la température de la chambre de préparation (3a) et de la chambre de focalisation (3b).

On entend par « échantillon » au sens de la présente invention tout échantillon solide, liquide ou gazeux, de préférence solide, susceptible de contenir des molécules organiques. Il peut s'agir par exemple d'un échantillon alimentaire, cosmétique, pharmaceutique, d'un échantillon de parfum, d'un échantillon de liquide physiologique (sang, urine, salive, etc.), ou encore d'un échantillon de sol prélevé en surface ou en profondeur, provenant par exemple d'un grattage ou d'une carotte de sol. Il peut s'agir par exemple de différents types de sols, par exemple roche, gravas, pierres, sable, poussière, etc. d'origine terrestre ou extraterrestre.

Au sens de la présente invention, l'échantillon peut comporter des molécules organiques ou non, qui peuvent être volatiles ou non-volatiles, présentes ou non à l'état de traces. Il peut s'agir de molécules chimiques ou de molécules biologiques, comme par exemple des alcanes, des acides carboxyliques, des acides aminés, des peptides, des protéines, des sucres, des acides gras, des lipides, des bases puriques, des amines, des hydrocarbures aromatiques polycycliques (HAP), des acides et bases nucléiques, de l'ADN ou de fragments de ces molécules. On entend par « molécules organiques non-volatiles » au sens de la présente invention toute molécule organique qui ne passe pas à l'état gazeux par chauffage sans dégradation, c'est-à-dire dont la volatilisation entraîne la dégradation. Il peut par exemple s'agir de molécules organiques de la liste précitée.

On entend par « compartiment » au sens de la présente invention une unité constituée d'un ensemble de moyens qui permettent le traitement et/ou le transfert de molécules organiques présentes dans un échantillon. Le DPIE de la présente invention présente deux compartiments dans lesquels peuvent être effectuées consécutivement deux opérations indépendantes.

Le compartiment de préparation du DPIE de l'invention permet d'effectuer toute opération de traitement d'un échantillon comme par exemple l'extraction des molécules de l'échantillon, par exemple par thermodésorption, mais également des transformations chimiques et/ou physique des molécules de l'échantillon, par exemple la fonctionnalisation, la pyrolyse, la thermochemolyse ou la volatilisation des molécules organiques de l'échantillon. Le compartiment de préparation permet également de réaliser le transfert des molécules organiques, par exemple de la chambre de préparation vers la chambre de focalisation.

Le compartiment d'injection permet de concentrer (ou « focaliser ») les molécules organiques à analyser, c'est-à-dire d'augmenter leur proportion dans la chambre de focalisation, et/ou de les injecter, c'est-à-dire de les transférer de façon ponctuelle, dans un instrument d'analyse. Les instruments d'analyse utilisables dans le cadre de l'invention sont décrits ci-dessous. Le compartiment d'injection peut notamment permettre d'effectuer :
- une injection avec division (ou mode « split ») : une partie des molécules organiques volatilisées en mélange dans le gaz de balayage est transférée dans l'instrument d'analyse tandis que l'autre partie est évacuée par balayage à l'extérieur du DPIE afin de ne pas saturer l'instrument d'analyse avec la totalité des molécules organiques ; ou
- une injection sans division (ou mode « splitless ») : l'ensemble des molécules organiques volatilisées présentes dans la chambre de focalisation sont transférées dans le système d'analyse, permettant par exemple une meilleure détection des molécules traces.

Le DPIE de l'invention fait donc à la fois office de réacteur de transformation de l'échantillon étanche, de focalisateur et d'injecteur.

En d'autres termes, le compartiment de l'invention permet d'extraire et/ou de détacher des molécules organiques d'un échantillon, et notamment des molécules organiques non-volatiles, sans les détruire, de les fonctionnaliser afin de les rendre plus volatiles, de les volatiliser, mais aussi de les concentrer et de les injecter dans un instrument d'analyse.

Le DPIE de la présente invention présente l'avantage d'être un dispositif complet et compact permettant l'analyse de traces de molécules organiques dans différentes matrices (solides, liquides ou gazeuses) et cela avec de faibles masses d'échantillon.

Le DPIE de la présente invention peut être montable et démontable sur un système d'analyse et présente l'avantage d'être transportable sur site de prélèvement de l'échantillon.

Par ailleurs, une fois l'échantillon introduit dans le DPIE, il n'y a plus de risques de pollution ou de contamination et/ou de perte de masse de l'échantillon jusqu'à son analyse. En effet, l'association étanche des deux compartiments du DPIE de l'invention présente l'avantage de permettre, dans un environnement confiné et étanche, de nombreuses possibilités de traitement de l'échantillon (comme par exemple l'extraction et la transformation chimique des molécules de l'échantillon), puis l'injection en évitant tout contact avec le milieu extérieur entre les opérations de préparation et d'injection. Il en résulte des analyses qualitatives et quantitatives plus fiables et plus reproductibles. Le DPIE de la présente invention est donc parfaitement adapté à l'analyse d'échantillons de faible masse présentant des traces de molécules organiques.

En outre, le DPIE de l'invention permet une grande diversité de traitements, tels que la pyrolyse ou des traitements beaucoup plus doux, comme par exemple la thermochemolyse et la dérivatisation, ce dernier traitement permettant de surcroît l'analyse de molécules organiques non volatiles sans dégradation ou dénaturation des molécules parents. Ainsi, la diversité des opérations réalisables et la grande souplesse conférée par les deux compartiments indépendants du DPIE de l'invention permet de rendre accessible à l'analyse une plus large gamme de molécules (volatiles et non volatiles), de donner plus de souplesse à l'interprétation des analyses et l'identification des molécules analysées (interprétations moins complexes que dans le cas de la pyrolyse de molécules) et d'avoir accès aux informations relatives aux propriétés physiques et chimiques des molécules (chiralité, asymétrie, etc.).

Le DPIE de la présente invention permet de traiter (c'est-à-dire d'extraire, de fonctionnaliser et de volatiliser) les molécules organiques de l'échantillon qualitativement et quantitativement, puis de les injecter qualitativement et quantitativement dans un instrument d'analyse.

Par « qualitativement », on entend au sens de la présente invention de façon à préserver la nature et qualité des échantillons, c'est-à-dire de façon à limiter voir éviter la dégradation des molécules organiques lors des étapes d'extraction, de fonctionnalisation et de volatilisation, et/ou à éviter la pollution des molécules organiques par des éléments extérieurs. Par « quantitativement », on entend au sens de la présente invention de façon à traiter (c'est-à-dire extraire, fonctionnaliser et volatiliser) et injecter le plus possible, de préférence l'intégralité, de molécules organiques présentes dans l'échantillon. La présente invention permet avantageusement, par exemple en utilisant un procédé de "fonctionnalisation extractive" approprié, d'atteindre un bon rendement de récupération des molécules organiques, notamment supérieur à 80%, et donc d'obtenir une quantité suffisante de molécules organiques pour les analyser.

Par « chambre », on entend au sens de la présente invention une enceinte ou un récipient apte à la réalisation de transformations chimiques et/ou physiques. Il peut s'agir par exemple de la chambre de préparation, qui est le lieu de préparation de l'échantillon, c'est-à-dire de traitement de l'échantillon, et notamment lieu d'extraction, de fonctionnalisation et de volatilisation des molécules organiques de l'échantillon. Il peut également s'agir de la chambre de focalisation, qui est essentiellement le lieu de condensation et de volatilisation des molécules organiques, permettant de focaliser, c'est-à-dire de concentrer les molécules organiques en vue de leur injection.

La chambre de préparation et/ou de focalisation peut être sous une forme quelconque, par exemple sous forme de tube, de disque, sous forme cylindrique, parallélépipédique, pyramidal, conique, tronconique, etc. La chambre de préparation et/ou de focalisation est de préférence constituée d'un matériau conducteur de chaleur de façon à permettre des montées et descentes rapides de la température. Il peut s'agir de tout matériau conducteur permettant de résister aux conditions de température et de pression appliquées dans le cadre de l'utilisation du DPIE. Des intervalles de température et de pression applicables dans le cadre de l'utilisation du DPIE sont par exemple décrits ci-dessous.

Avantageusement, la chambre de préparation et/ou de focalisation peut être constitué d'un ou plusieurs matériaux choisis dans le groupe comprenant le verre, le pyrex, le quartz, la céramique, un métal, par exemple le cuivre ou le titane, ou un alliage métallique, par exemple l'acier ou l'inox.

Avantageusement, la chambre de préparation et/ou de focalisation peut être un tube (ou « liner » en anglais), par exemple en quartz, en verre, en pyrex, en céramique, en métal ou en alliage métallique. A titre de tubes ou « liners » utilisables dans le DPIE de l'invention, on peut par exemple citer le liner commercialisé par la société Restec (France) sous la référence 45320031. Le tube ou du « liner » peut être par exemple de 1 à 5 mm. La longueur du tube ou du « liner » peut être par exemple de 4 à 15 cm, par exemple de 7 à 10 cm.

Selon l'invention, le volume de l'enceinte de la chambre de préparation et/ou de la chambre de focalisation peut être de 0,2 à 10 mL, par exemple de 0,2 à 5 mL, par exemple de 0,5 à 2 mL.

Par ailleurs, la chambre de préparation et/ou la chambre de focalisation peut être amovible, permettant par exemple d'être nettoyée manuellement.

Les parois internes de la chambre peuvent être lisses afin d'éviter que des poches de gaz subsistent après le balayage par le gaz de balayage.

En outre, les parois internes de la chambre sont avantageusement en matériau inattaquable, en particulier lorsque les conditions d'utilisation de la chambre peuvent être corrosives. Il peut s'agir par exemple d'un métal inattaquable ou recouvert d'un revêtement inattaquable afin d'éviter que les substances, notamment liquides, introduites dans la chambre n'attaquent les parois internes de la chambre. Parmi les revêtements utilisables, on peut citer par exemple le traitement Silcosteel (marque déposée) développé par la société Restek (USA) et décrit dans le brevet US N° 6,511,760 **(réf 2).** Par exemple, ce revêtement peut avoir une épaisseur de 300Å à 450 Å, par exemple de 300Å à 350 A 450Å et peut supporter une température de 600°C. Par exemple, ce revêtement peut supporter une température 1000°C. Par exemple, ce revêtement peut supporter une température 1200°C.

Par « moyen d'introduction », on entend au sens de la présente invention un passage de l'extérieur vers l'intérieur de la chambre de préparation, et inversement. Il peut s'agir par exemple d'une ouverture avec un couvercle ou un septum, d'un sas, d'une canalisation munie d'une vanne, d'un moyen d'injection par vis, d'un moyen d'injection par piston, etc. L'ouverture et la fermeture de ce moyen d'introduction peuvent être effectuées manuellement ou automatiquement, par exemple commandée par une unité de commande. Lorsque le moyen d'introduction est fermé, la chambre de préparation est étanche. Le couvercle est tel qu'il peut fermer la chambre de préparation de manière étanche, par exemple au moyen d'un pas de vis et d'un joint torique. Le couvercle peut éventuellement être muni d'un joint d'étanchéité. Le joint est de préférence réalisé en un matériau étanche résistant à des températures supérieures à 600°C, par exemple à une température de 1000°C. À titre d'exemple, le joint d'étanchéité peut notamment être réalisé en graphite, en inox et tout autre métal résistant à des températures de 600°C, par exemple à une température de 1000°C.

Le « gaz de balayage » circulant à travers la chambre de préparation et/ou la chambre de focalisation peut être un gaz inerte, c'est-à-dire un gaz qui ne réagit pas avec les molécules organiques de l'échantillon. A titre de gaz inerte, on peut citer par exemple l'hélium, l'azote, l'argon, le dioxyde de carbone, etc.

L'entrée et la sortie étanches de la chambre de préparation permettent la circulation du gaz de balayage au travers de la chambre de préparation. Cette circulation ou ce balayage de la chambre de préparation avec ledit gaz de balayage permet par exemple d'entraîner des molécules organiques volatilisées de la chambre de préparation vers la chambre de focalisation.

Selon l'invention, la chambre de préparation peut comprendre en outre une seconde sortie étanche de gaz de balayage. Cette seconde sortie, dirigée vers l'extérieur du DPIE, permet d'effectuer un balayage de la chambre de préparation indépendamment de la chambre de focalisation, et notamment, d'évacuer des solvants évaporés à l'extérieur du DPIE ou encore de nettoyer et/ou de vidanger de la chambre de préparation en éliminant des impuretés volatiles susceptibles d'être présentes dans de la chambre de préparation.

L'entrée et la sortie étanches de la chambre de focalisation permettent la circulation du gaz de balayage au travers de la chambre de focalisation. Cette circulation, ou ce balayage de la chambre de focalisation avec ledit gaz de balayage, permet par exemple d'entraîner des molécules organiques volatilisées de la chambre de focalisation vers un instrument d'analyse. Lorsque le DPIE est monté sur le système d'analyse, la sortie étanche de la chambre de focalisation peut être reliée à un instrument d'analyse.

Selon l'invention, la chambre de focalisation peut comprendre en outre une seconde entrée étanche de gaz de balayage et/ou une seconde sortie étanche du gaz de balayage. Cette seconde entrée, peut être reliée à un réservoir de gaz de balayage et permet l'arrivée d'un gaz de balayage directement dans la chambre de focalisation sans passer par la chambre de préparation. Par ailleurs, la seconde sortie du gaz de balayage, est dirigée vers l'extérieur du DPIE, permet l'évacuation partielle ou totale du gaz de balayage et des impuretés ou molécules qu'il entraîne. Cette seconde entrée et cette seconde sortie permettent ainsi d'effectuer un balayage de la chambre de focalisation indépendamment de celui de la chambre de préparation, par exemple pour nettoyer et/ou vidanger la chambre de focalisation en éliminant des impuretés volatiles susceptibles d'être présentes dans de la chambre de focalisation. En outre, la seconde sortie de la chambre de focalisation peut permettre permet d'effectuer une injection avec division (« split ») ou une injection sans division (« splitless »). Ces deux modes d'injection sont décrits ci-dessus.

Par ailleurs, la chambre de focalisation peut comprendre un adsorbant. Par exemple, les parois internes de la chambre de focalisation peuvent être recouvertes d'un adsorbant. Ceci permet de piéger dans la chambre de focalisation les molécules organiques balayées par le gaz de balayage et de les focaliser, c'est-à-dire de les concentrer en vue de leur injection dans un instrument d'analyse.

On entend par « adsorbant » au sens de la présente invention un solide ou un revêtement solide capable de fixer à sa surface des molécules organiques sous forme gazeuse ou liquide. On peut citer par exemple le charbon actif, l'alumine, les zéolithes, les matériaux réticulaires métal-organiques (ou « Metal Organique Framework »), les résines poreuses, comme par exemple le Carbosieve (marque de commerce) (SigmaAldrich), le Carboxen (marque de commerce) (Supelco), le Small Particle Size GCB Materials (Supelco), le Carbotrap (marque de commerce) (Supelco), le Carbopack (marque de commerce) (Supelco), le Tenax (marque déposée) (Supelco) ou un mélange de ces matériaux. Par exemple, l'adsorbant peut être un mélange de billes de verre, de Carbosieve (marque de commerce) (SigmaAldrich) et de Tenax (marque déposée) (Supelco). Par exemple, les billes de verre, le Carbopack (marque de commerce) (Supelco) et le Tenax (marque déposée) (Supelco) peuvent être mélangés à un ratio de 1/1/1.

Selon l'invention, en entend par « étanche » le fait de ne pas laisser passer un solide, un liquide ou un gaz. L'étanchéité de la chambre de préparation et/ou de la chambre de focalisation peut par exemple être requise pour permettre une extraction efficace de molécules organiques et/ou de leur concentration.

L'homme du métier est à même de déterminer les moyens permettant de rendre étanche la chambre de préparation et/ou de la chambre de focalisation. Il peut s'agir par exemple d'une vanne.

On entend par « vanne », au sens de la présente invention, un dispositif permettant d'arrêter ou de modifier le débit de gaz de balayage entraînant éventuellement des molécules organiques volatilisées. Il peut par exemple s'agir d'une vanne de régulation ou d'une vanne « tout ou rien ». Le matériau constituant la vanne peut être un métal ou un alliage de métaux, par exemple l'acier inoxydable, ou tout autre matériau résistant aux conditions physico-chimiques lors de l'utilisation du dispositif de la présente invention. On peut citer par exemple les vannes commercialisées par la société Parker (USA) sous les références 22204 (vanne à débit réglable) ou 22190 (vanne « tout ou rien ») ou les vannes commercialisées par la société SGE (Australie) sous les références 123628, 1236282, 1236091, etc. D'autres vannes utilisables dans le DPIE sont connues de l'homme du métier. Par ailleurs, la vanne peut être commandée manuellement ou automatiquement.

Avantageusement, selon l'invention, des vannes peuvent être présentes dans le moyen d'introduction de l'échantillon (9), au niveau de l'entrée (13a) étanche permettant la circulation d'un gaz de balayage au travers de la chambre de préparation, entre la sortie (10) étanche de la chambre de préparation et l'entrée (11) étanche de la chambre de focalisation et/ou au niveau de la sortie (12) étanche permettant la circulation d'un gaz de balayage au travers de la chambre de focalisation. Des vannes peuvent également être présentes au niveaux de la seconde sortie étanche de gaz de balayage de la chambre de préparation, de la seconde entrée étanche de gaz de balayage de la chambre de focalisation et/ou de la seconde sortie étanche de la chambre de focalisation lorsque celles-ci sont présentes.

Avantageusement, selon l'invention, les deux compartiments de préparation et d'injection sont accolés, c'est-à-dire associés de manière à ce que le contenu de la chambre de préparation passe directement dans la chambre de focalisation sans ligne de transfert. Ceci permet en effet d'éviter les problèmes de fuite et de condensation des molécules organiques volatilisées dans les canalisations reliant la sortie de la chambre de préparation et l'entrée de la chambre de focalisation. Par exemple, la distance entre la sortie (10) de la chambre de préparation et l'entrée (11) de la chambre de focalisation peut être inférieure à 15 cm, par exemple inférieure à 10 cm, par exemple inférieure à 5 cm.

Selon l'invention, les deux compartiments de préparation et d'injection peuvent fonctionner indépendamment l'un de l'autre.

Selon l'invention, les deux compartiments de préparation et d'injection peuvent être identiques. Ainsi, les deux compartiments peuvent être interchangeables, c'est-à-dire qu'ils peuvent l'un ou l'autre être utilisés comme compartiment de préparation ou compartiment d'injection.

Selon l'invention, les deux compartiments de préparation et d'injection peuvent être dissociables. Ceci permet de nettoyer indépendamment la chambre du compartiment de préparation et/ou la chambre du compartiment d'injection. Ceci permet également de retirer, lorsqu'elle est amovible, la chambre de préparation et/ou la chambre de focalisation de son compartiment, afin de la vider, de la nettoyer et/ou de la remplacer.

Avantageusement, le moyen de chauffage de la chambre de préparation et/ou de la chambre de focalisation est capable d'appliquer une température de 600°C. De préférence, le moyen de chauffage de la chambre de préparation et/ou de la chambre de focalisation est capable d'appliquer une température de 1000°C. Ces températures sont par exemple requises pour la mise en oeuvre par le dispositif de l'invention de procédés de traitement de l'échantillon, par exemple l'extraction ou la transformation chimique ou physique de molécules organiques contenues dans l'échantillon.

Avantageusement, le moyen de chauffage de la chambre de préparation et/ou de la chambre de focalisation est capable d'appliquer une vitesse moyenne de chauffage de 10 à 60 °C/seconde. De préférence, le moyen de chauffage de la chambre de préparation et/ou de la chambre de focalisation est capable d'appliquer une vitesse moyenne de chauffage de 30 à 60 °C/seconde, de préférence de 40 à 60 °C/seconde, par exemple de 45 à 55 °C/seconde, par exemple 50 °C/seconde. Ces montées rapides en température permettent de minimiser les temps de variation de température et de contrôler précisément les durées de chauffage à température élevées nécessaires à la mise en oeuvre de procédés de traitement de l'échantillon, par exemple l'extraction ou la transformation chimique ou physique de molécules organiques contenues dans l'échantillon.

Avantageusement, le moyen de refroidissement de la chambre de préparation et/ou de la chambre de focalisation est capable d'appliquer une température de -160°C. De préférence, le moyen de refroidissement de la chambre de préparation et/ou de la chambre de focalisation est capable d'appliquer une température de -195°C. Ces températures sont par exemple requises pour la mise en oeuvre par le dispositif de l'invention de procédés de traitement de l'échantillon, par exemple la condensation de molécules organiques extraites à partir de l'échantillon. Ce moyen de refroidissement est exposé ci-dessous.

Avantageusement, le moyen de refroidissement de la chambre de préparation et/ou de la chambre de focalisation est capable d'appliquer une vitesse moyenne de refroidissement de 10 à 60 °C/seconde. De préférence, le moyen de refroidissement de la chambre de préparation et/ou de la chambre de focalisation est capable d'appliquer une vitesse moyenne de refroidissement de 30 à 60 °C/seconde, de préférence de 40 à 60 °C/seconde, par exemple de 45 à 55 °C/seconde, par exemple 50 °C/seconde. Ces descentes rapides en température permettent de contrôler précisément les durées de chauffage ou de refroidissement nécessaires à la mise en oeuvre de procédés de traitement de l'échantillon, par exemple l'extraction ou la transformation chimique ou physique de molécules organiques contenues dans l'échantillon. Ce moyen de refroidissement est exposé ci-dessous.

Ainsi, les moyens de chauffage et de refroidissement très rapides permettent de maîtriser parfaitement les temps durant lesquels la chambre de préparation et/ou la chambre de focalisation est soumise aux hautes ou basses températures, puisque les paliers intermédiaires de montée ou de descente de température sont maîtrisés et atteints très rapidement. Par exemple, la montée et descente rapide de température dans la chambre de préparation présente l'avantage de permettre l'extraction de molécules organiques par thermodésorption à des températures extrêmes (par exemple à des températures supérieures à 250°C, par exemple supérieures à 350°C, par exemple supérieures à 450°C, par exemple une température de 600°C, par exemple une température de 1000°C pendant des durées bien maîtrisées, ce qui permet d'éviter la dégradation des molécules organiques. En outre, la montée et descente rapide de température dans la chambre de focalisation présente l'avantage de permettre la condensation rapide puis la vaporisation rapide des molécules organiques permettant leur injection rapide et ponctuelle, nécessaire à la qualité de l'analyse.

Le moyen de chauffage de la chambre de préparation et/ou de la chambre de focalisation est situé dans le compartiment de préparation et/ou d'injection respectivement. Selon l'invention, le moyen de chauffage peut être choisi dans le groupe comprenant un élément chauffant, une cartouche chauffante, une plaque chauffante, une résistance électrique, un balayage de fluide (liquide ou gaz) chaud dans le compartiment correspondant, un chauffage radiatif, par exemple par induction ou par halogène. Avantageusement, le moyen de chauffage peut être un élément chauffant, comprenant par exemple une résistance électrique. L'élément chauffant peut être par exemple sous la forme d'un cylindre creux dans lequel est intercalée la chambre de préparation et/ou la chambre de focalisation. L'élément chauffant peut éventuellement être protégée par un blindage, par exemple en acier inoxydable. Afin de permettre une montée rapide de la température de la chambre de préparation et/ou de focalisation, la puissance de l'élément chauffant peut être par exemple supérieure à 400 W (Watt). A titre de moyens de chauffages, on peut citer par exemple la cartouche chauffante commercialisée par la société RS Components (France) sous la référence 731-243 ou un élément chauffant avec extrémité froide réalisé sur mesure par la société Thermocoax (France).

Le moyen de refroidissement de la chambre de préparation et/ou de la chambre de focalisation est situé dans le compartiment de préparation et/ou le compartiment d'injection respectivement. Selon l'invention, le moyen de refroidissement peut être choisi dans le groupe comprenant une plaque de refroidissement, un gel de refroidissement, un balayage de fluide de refroidissement dans le compartiment correspondant, un circuit de refroidissement en contact avec la chambre de préparation et/ou de focalisation ou à l'intérieur de ladite chambre ou un élément de refroidissement par effet Peltier ou effet thermoélectrique.

On entend par gel ou par fluide « de refroidissement » au sens de la présente invention un gel ou un fluide, par exemple un liquide ou un gaz, permettant le refroidissement rapide de la chambre (de préparation ou de focalisation), notamment à une vitesse moyenne de 10 à 60 °C/seconde, par exemple de 25 à 60 °C/seconde, par exemple de 30 à 60 °C/seconde, par exemple de 40 à 60 °C/seconde, par exemple de 45 à 55 °C/seconde, par exemple 50 °C/seconde. Par exemple, le gel ou le fluide de refroidissement peut permettre le refroidissement de la chambre de préparation et/ou de focalisation à une température de -160°C, par exemple à une température de -195°C. Parmi les liquides ou gels de refroidissement, on peut citer par exemple l'eau, l'azote liquide, le CO₂ ou les mélanges réfrigérants comprenant par exemple de la glace ou de la carboglace. Parmi les gaz de refroidissement, on peut citer par exemple l'air froid, le CO₂, l'azote, l'argon, l'hélium, etc.

On entend par « circuit de refroidissement » au sens de la présente invention un circuit comprenant un ou plusieurs conduits dans lesquels sont mis en circulation des fluides de refroidissement, par exemple des liquides ou gaz de refroidissement. Le circuit de refroidissement peut par exemple être en contact avec l'extérieur la chambre de préparation et/ou de focalisation ou passer à l'intérieur de la chambre.

On entend par « plaque de refroidissement » au sens de la présente invention une plaque capable d'absorber la chaleur du compartiment et/ou de la chambre par transfert thermique, par exemple par contact direct. Il peut s'agir d'une plaque pleine en matériau conducteur de chaleur ou d'une plaque traversée par un circuit de refroidissement. La rapidité du refroidissement de la chambre de préparation et/ou de focalisation peut dépendre de divers paramètres comme par exemple le matériau conducteur de la plaque de refroidissement et/ou le matériau de la chambre, l'épaisseur de la plaque de refroidissement, la surface de contact la plaque de refroidissement avec la chambre, la qualité du contact de la plaque de refroidissement avec la chambre, le volume de la chambre à refroidir, la variation de température à effectuer. Les calculs de transfert de chaleur peuvent être effectués en utilisant par exemple un coefficient d'échange H de 10 000 W/m²/°C. Parmi les matériaux conducteurs utilisables, on peut citer par exemple le cuivre, l'inox ou le titane.

Selon l'invention, la chambre de préparation présente en outre un moyen étanche d'introduction d'une substance liquide dans la chambre de préparation.

On entend par « substance liquide » au sens de la présente invention tout liquide ou mélange de liquides utilisable dans le cadre de l'application du DPIE. Il peut s'agir par exemple d'un solvant, d'un mélange de solvants ou d'un réactif liquide, comme par exemple un agent de fonctionnalisation, celui-ci étant éventuellement en mélange dans un solvant.

On entend par « moyen étanche d'introduction d'une substance liquide » au sens de la présente invention tout moyen étanche connu de l'homme du métier permettant d'introduire une substance liquide dans la chambre de préparation. Le moyen étanche d'introduction d'une substance liquide dans la chambre de préparation peut être par exemple une ouverture munie d'un septum constitué d'une matière à la fois perforable et auto-obturable. Ainsi, le septum peut être traversé par une aiguille ou une seringue permettant l'injection de ladite substance liquide. Le septum peut être constitué de toute matière perforable et auto-obturable connue de l'homme du métier, par exemple du silicone, du polyuréthane, du caoutchouc, etc. Le moyen étanche d'introduction d'une substance liquide dans la chambre de préparation peut également être un conduit muni d'une vanne contrôlant l'introduction de ladite substance liquide dans la chambre de préparation. La vanne peut éventuellement être connectée à une unité de commande qui permet de commander et de contrôler l'injection de substance liquide et le volume de substance liquide à injecter.

Selon un autre mode de réalisation, le moyen d'introduction d'une substance liquide peut également être composé d'un compartiment, formé par exemple dans le fond de la chambre, contenant la substance liquide et séparé de l'échantillon, par exemple solide, par un film de matériau perforable. Ainsi, ladite substance liquide peut être mise en contact avec l'échantillon à l'aide d'un système de perforation du film.

Dans un autre mode de réalisation, le moyen d'introduction d'une substance liquide peut être composé d'une capsule contenant une substance liquide, en matériau thermodestructible et disposée dans la chambre de préparation. Ainsi, ladite substance liquide peut être mise en contact avec l'échantillon par chauffage à une température supérieure à la température de fusion du matériau thermodestructible. A titre de matériaux thermodestructibles, on peut citer par exemple l'alliage Castolin 1800 commercialisé par la Société Castolin Eutectic (France).

Dans un mode de réalisation particulier de l'invention, le DPIE peut comprendre en outre au moins un réservoir destiné à contenir une substance liquide, connecté audit moyen étanche d'introduction d'une substance liquide. Celui-ci permet d'approvisionner directement la chambre de préparation en substance liquide et peut être par exemple utile pour des applications spatiales.

Selon l'invention, le moyen de contrôle de la température peut être un capteur de température en contact avec la chambre de préparation et/ou de focalisation ou positionné dans le compartiment de préparation et/ou d'injection. Il peut par exemple s'agir d'un capteur à résistance ou à thermistance, d'un couple thermoélectrique ou d'un capteur de température infrarouge, ce dernier permettant par exemple de mesurer la température sans contact avec la chambre de préparation et/ou de focalisation. On peut citer par exemple les thermomètres à résistance de platine, tels que les sondes PT 1000, PT 100, par exemple la sonde PT100 commercialisée par la société Rosemount Aerospace (Angleterre) sous la référence 0118MF2000A.

Selon l'invention, le moyen de commande et de contrôle de la température peut être un thermocouple associé avec le moyen de chauffage de la chambre de préparation et/ou de focalisation.

Avantageusement, le DPIE selon l'invention peut comprendre en outre des moyens de commande et de contrôle de la pression dans la chambre de préparation et/ou dans la chambre de focalisation.

Selon l'invention, le moyen de contrôle de la pression peut comprendre un capteur de pression positionné dans la chambre de préparation et/ou de focalisation. Par exemple, le capteur de pression peut être connecté à un orifice formé dans la chambre ou déporté légèrement en aval de celle-ci, par exemple sur un conduit allant de la chambre de préparation à la chambre de focalisation ou sur un conduit allant de la chambre de focalisation vers un instrument d'analyse. Ainsi, la pression peut être mesurée soit directement dans la chambre, soit à la sortie de la chambre, par exemple jusqu'à 3 cm en aval de la chambre, par exemple à 2 cm en aval de la chambre. Selon l'invention, le capteur de pression résiste de préférence aux conditions de température et de pression appliquées dans le cadre de l'utilisation du DPIE. On peut citer par exemple le capteur de pression PA-21 SR / 5bar (Réf. : 805203) commercialisé par la société Meiri (France), ou encore le capteur de pression à fibre optique commercialisé par la société FISO Technologies (Canada) sous la référence FOP-MH, qui supporte la température de 450°C.

Avantageusement, le DPIE de l'invention peut comprendre en outre un système d'acquisition des valeurs de température et de pression, ledit système permettant de contrôler, de suivre et d'enregistrer en continu la température et la pression de la chambre de préparation et/ou de focalisation au cours de l'utilisation du DPIE. Ce système permet ainsi d'acquérir et de traiter les données de température et de pression sur un ordinateur, et/ou, lorsqu'il est couplé à un moyen de commande de la température et/ou de la pression, de fixer ou réajuster la température et la pression à l'intérieur du DPIE. Ce système permet donc de savoir ce qui se passe dans le DPIE à un instant donné et d'optimiser toutes les conditions. Parmi les systèmes utilisables, on peut citer par exemple un Equipement de Test et de Contrôle (ETC), permettant l'acquisition de la température et de la pression, ainsi que leur contrôle. Cet équipement de Test et de Contrôle intègre notamment le Logiciel LabVIEW (Signal Express avec SSP), une carte d'acquisition (NI PCI-4351) de températures et de pression et une alimentation stabilisée avec une entrée pour le pilotage analogique. Cet équipement intègre également une phase de programmation de l'interface Homme / Machine et de la gestion de la régulation thermique permettant le stockage des données.

En outre, le compartiment d'injection du DPIE de l'invention peut permettre d'effectuer une injection selon une programmation de température ou injection PTV (ou « Programmed Temperature Vaporization »). Ceci présente l'avantage de permettre, par gradient de température, l'élimination sélective du solvant éventuellement présent avec les molécules organiques à analyser, la séparation préalable des molécules organiques à injecter en fonction de leur température de volatilisation, et donc l'injection de plus grandes quantités de molécules organiques dans l'instrument d'analyse.

Selon l'invention, le DPIE peut comprendre en outre un moyen permettant de faire le vide ou d'appliquer une pression dans la chambre de préparation et/ou dans la chambre de focalisation. Le moyen permettant de faire le vide ou d'appliquer une pression peut être commun à la chambre de préparation et à la chambre de focalisation ou il peut s'agir d'un moyen distinct pour chacune des chambres de préparation et de focalisation. Le moyen permettant de faire le vide ou d'appliquer une pression peut par exemple être relié à une sortie de gaz de balayage de la chambre de préparation et/ou de la chambre de focalisation ou être connecté à une sortie supplémentaire de la chambre de focalisation permettant le « split » (c'est-à-dire la division) des molécules organiques comme décrit ci-dessus. On entend par moyen permettant d'appliquer une pression dans la chambre de préparation et/ou de focalisation, tout moyen permettant de mettre l'intérieur de la chambre sous une pression de 0,1 à 2.10⁵ kPa, par exemple de 0,1 à 200 kPa, par exemple de 10 à 100 kPa. Parmi les moyens permettant d'appliquer une pression utilisable, on peut citer par exemple une pompe à vide, un générateur de pression, par exemple un compresseur pneumatique, un compresseur électrique, un compresseur à membranes, une sortie connectant la chambre de préparation et/ou de focalisation à un environnement extérieur à la chambre permettant par exemple de mettre la chambre à la pression dudit environnement extérieur à la chambre ou à une pression intermédiaire, etc. A titre d'exemple, pour les applications spatiales sur Mars, le moyen permettant d'appliquer une pression peut être une sortie commandée par une vanne donnant sur l'environnement de Mars et permettant d'appliquer à la chambre une pression inférieure ou égale à la pression martienne qui est de 0,7 kPa. Parmi les pompes utilisables, on peut citer par exemple une pompe rotative, une pompe à piston, une pompe à palettes, une pompe à bélier, une pompe à godets, une pompe péristaltique, une pompe à vide, une pompe à engrenages, une pompe Valdès, une pompe par Airlift, une pompe hydraulique, une pompe pneumatique, ou toute autre pompe connue de l'homme du métier.

Par exemple, le moyen permettant de faire le vide ou d'appliquer une pression dans la chambre, appelé également moyen de commande de la pression, peut permettre d'optimiser les conditions de traitement de l'échantillon, notamment les conditions d'extraction, de fonctionnalisation et de volatilisation des molécules organiques de l'échantillon. En particulier, le moyen de commande de la pression présente l'avantage d'améliorer et d'optimiser les rendements d'extraction par thermodésorption grâce à une bonne maîtrise de la pression dans la chambre de préparation.

Selon l'invention, le DPIE peut comprendre en outre un moyen d'aspiration de fluides ou de molécules organiques volatilisées. Ce moyen permet d'évacuer par exemple les fluides issus de l'évaporation d'une substance liquide, les gaz de balayage, les fluides de refroidissement ou les molécules organiques volatilisées susceptibles d'être présentes dans la chambre de préparation et/ou de focalisation. Cette évacuation permet par exemple de vidanger ou de nettoyer ladite chambre. Il peut par exemple s'agir du moyen permettant de faire le vide précité. Parmi les moyens d'aspiration utilisables, on peut citer par exemple une pompe à vide, une sortie connectant la chambre de préparation et/ou de focalisation à un environnement extérieur à ladite chambre dont la pression est inférieure à celle de ladite chambre, par exemple pour des applications spatiales du DPIE.

Selon l'invention, le DPIE peut comprendre en outre un moyen de nettoyage de la chambre (de préparation ou de focalisation), permettant d'évacuer le solide, les fluides ou les particules susceptibles d'être présentes dans la chambre et de la nettoyer.

Par exemple, le nettoyage de la chambre (de préparation ou de focalisation) peut être réalisé par pyrolyse et évacuation des impuretés volatilisées issues de la pyrolyse par balayage de la chambre par un gaz de balayage.

Par ailleurs, le nettoyage de la chambre de focalisation peut être effectué par un « balayage inverse » (ou « backflush ») de ladite chambre par un gaz de balayage. Par exemple, la chambre de focalisation peut être balayée par le gaz de balayage de la sortie (14b) vers l'entrée (13b). Ceci permet, dans le cas où la chambre de focalisation comprend un adsorbant, d'évacuer plus facilement les restes de molécules organiques éventuellement restées sur l'adsorbant en les balayant vers la sortie la plus proche. Ce balayage inverse peut éventuellement être effectué au moyen d'une entrée supplémentaire de gaz proche de la sortie (12) de la chambre de focalisation.

Par exemple, le nettoyage de la chambre peut également être réalisé par évacuation du solide, par exemple par le moyen d'introduction du DPIE ou par un sas de vidange, puis lavage, manuel ou automatisé, avec un ou plusieurs solvant(s), comme par exemple de l'éthanol ou de l'acétone, éventuellement sous ultrasons, et éventuellement suivi d'un séchage par un gaz inerte.

Avantageusement, ledit moyen de nettoyage permet le nettoyage de la chambre en moins d'une heure. Le moyen de nettoyage du DPIE de l'invention permet de garantir la propreté de la chambre avant ou après chaque utilisation du DPIE. Par exemple, il peut permettre une grande propreté des chambres de préparation et/ou de focalisation avec une concentration d'impuretés résiduelles inférieure à 10⁻¹⁴ mole/cm³, de préférence inférieure à 10⁻¹⁵ mole/cm³. Cette propreté peut être évaluée à l'aide d'un balayage de la chambre de préparation et/ou de la chambre de focalisation et d'une analyse par CPG-SM ayant par exemple une limite de détection de 10⁻⁴ mole/cm³, par exemple de 10⁻¹⁵ mole/cm³. Ainsi, le moyen de nettoyage du DPIE de l'invention permet au DPIE d'être réutilisable plusieurs fois.

Selon l'invention, le DPIE peut comprendre en outre un moyen de chauffage du gaz de balayage. Il peut par exemple s'agir des moyens de chauffage des compartiments de préparation et/ou d'injection par lequel le gaz de balayage transite. Il peut également s'agir d'une cartouche chauffante permettant de chauffer le gaz en sortie du réservoir ou d'une gaine thermostatée entourant la canalisation connectant ledit réservoir à une entrée étanche de la chambre de préparation et/ou de la chambre de focalisation. On peut par exemple citer la cartouche chauffante commercialisée par la société RS Components, France, sous la référence 731-243.

Le DPIE selon l'invention peut comprendre en outre au moins un moyen d'agitation. En effet, celui-ci peut permettre d'améliorer les rendements ou d'accélérer les étapes de préparation d'échantillon, notamment au cours des étapes d'extraction et de fonctionnalisation.

On entend par « moyen d'agitation » au sens de la présente invention tout moyen approprié pour permettre l'agitation du contenu de la chambre de préparation comprenant l'échantillon. Il peut s'agir par exemple d'un agitateur magnétique, d'un agitateur mécanique, d'une sonde à micro-ondes, d'un moyen permettant d'appliquer des ultrasons à l'intérieur de la chambre de préparation, comme par exemple une cuve à ultrasons dans laquelle est placé le DPIE ou une sonde à ultrasons placée par exemple sur ou dans de la chambre de préparation.

Avantageusement, le moyen d'agitation peut être une sonde appliquant des ultrasons à l'intérieur de la chambre de préparation. Cette sonde résiste de préférence aux conditions de température et de pression appliquées dans le cadre de l'utilisation du DPIE. Ainsi, la sonde à ultrasons peut permettre une agitation thermique d'un mélange solide-liquide ou liquide-liquide contenu dans de la chambre de préparation. Par exemple, la sonde à ultrasons peut être disposée dans un orifice de la chambre de préparation débouchant à l'intérieur de celle-ci. Il peut par exemple s'agir d'une sonde à ultrasons comprenant un générateur ultrasonique, un transducteur piézoélectrique, un adaptateur et une sonotrode. On peut par exemple citer la sonotrode commercialisée par la société Hielscher USA sous la référence UP50H. En outre, la sonde à ultrasons peut être équipée d'un variateur de fréquence et/ou d'intensité des ultrasons. Ainsi, en faisant varier la fréquence et l'intensité des ultrasons ou en optimisant les valeurs de fréquence et d'intensité des ultrasons, ladite sonde peut permettre d'améliorer le traitement, notamment l'extraction et la fonctionnalisation, de l'échantillon, en termes d'efficacité, de rapidité et/ou de rendement. Ce moyen d'agitation présente également l'avantage d'être peu encombrant et donc plus compatible avec des contraintes d'encombrement du DPIE.

Avantageusement, le DPIE selon l'invention peut comprendre en outre au moins un moyen de rétention de l'échantillon solide ou liquide dans la chambre de préparation, agencé pour retenir l'échantillon lors de la circulation du gaz de balayage. Le moyen de rétention d'un échantillon solide permet notamment d'éviter que des particules de l'échantillon solide n'atteignent le ou les instruments d'analyse.

Le moyen de rétention peut être par exemple une grille ou un matériau de protection de porosité inférieure à la granulométrie minimale de l'échantillon placée en sortie de la chambre de préparation afin d'empêcher le passage du solide. Le moyen de rétention peut être par exemple une couche de fritté, de laine de verre, de fibres de verre ou de coton disposée à la sortie de la chambre de préparation pour éviter, lors du balayage par le gaz de balayage, d'entraîner une partie de l'échantillon solide. On notera, toutefois, que compte tenu des faibles pressions de gaz utilisées lors du balayage, l'utilisation d'un tel moyen de rétention n'est pas obligatoire. En outre, le moyen de rétention peut être nettoyable et/ou remplaçable en cas d'obstruation par le solide.

Selon un deuxième aspect, l'invention concerne également un système d'analyse comprenant un dispositif de préparation et d'injection d'échantillon (DPIE) selon l'invention et au moins un instrument d'analyse connecté en aval dudit DPIE. Ce système d'analyse au sens de la présente invention permet la préparation de l'échantillon, l'injection des molécules organiques de l'échantillon dans l'instrument d'analyse en vue de leur analyse chimique.

On entend par « instrument d'analyse » au sens de la présente invention tout appareil permettant l'analyse chimique de molécules organiques, par exemple l'analyse moléculaire, chirale, et même isotopique (cette dernière pouvant être obtenue au moyen d'un spectromètre de masse par exemple). L'instrument d'analyse peut par exemple être choisi dans le groupe comprenant un spectromètre infra-rouge, un chromatographe, utilisant par exemple la chromatographie en phase gazeuse (CPG), ou la chromatographie liquide haute performance (CLHP), un spectromètre de masse (SM), un spectromètre Raman. L'instrument d'analyse peut éventuellement être un instrument miniaturisé par exemple pour des applications spatiales du système d'analyse. On peut par exemple citer l'instrument d'analyse par chromatographie en phase gazeuse décrit dans le document de Sternberg et al., Encyclopaedia of Séparation Science, Academic Press, London, (2006) (réf 3).

Selon l'invention, le système d'analyse peut comprendre en outre un détecteur connecté en aval dudit instrument d'analyse. Parmi les détecteurs utilisables on peut citer par exemple un spectrophotomètre, un spectromètre infra-rouge (IR), un spectromètre de masse (SM), un détecteur à ionisation de flamme (FID ou « Flame ionization detector »), un détecteur à conductivité thermique (TCD ou « Thermal Conductivity Detector »).

Avantageusement, l'instrument d'analyse peut être un chromatographe en phase gazeuse. De préférence, l'instrument d'analyse peut être un chromatographe en phase gazeuse (CPG) couplé à un spectromètre de masse (SM) ou à un détecteur, qui peut être un détecteur classique de CPG. On peut citer par exemple l'instrument d'analyse décrit dans le document de Sternberg et al., Encyclopaedia of Separation Science, Academic Press, London, (2006) **(réf 3).**

Le système d'analyse peut comprendre, en outre, un circuit de balayage des molécules organiques comprenant :
- un réservoir de gaz de balayage, comme par exemple une bouteille de gaz ou un réservoir de gaz, éventuellement portatif comme par exemple un « tank », utilisable par exemple pour des applications spatiales ;
- une canalisation connectant ledit réservoir de gaz de balayage à l'entrée étanche de la chambre de préparation ; et
- une canalisation connectant la sortie de la chambre de focalisation à l'instrument d'analyse.

Le système d'analyse peut être un système amovible, c'est-à-dire qui peut être monté, démonté et/ou déplacé ou encore dont les éléments constituant le système d'analyse peuvent être séparés, par exemple par vissage, par clips, etc.

En résumé, le DPIE de la présente invention présente l'avantage de permettre par un seul dispositif combiné et étanche, la préparation d'un échantillon solide ou liquide en un seul lieu et avec un minimum d'étapes, et notamment l'extraction, la fonctionnalisation et la volatilisation de molécules organiques présentes dans un échantillon, ainsi que leur concentration et leur injection dans un instrument d'analyse. Il permet ainsi l'analyse de tout type d'échantillon, même solide, et l'analyse d'une large gamme de molécules organiques sans dénaturation de leurs propriétés chimiques et physiques. En outre, le DPIE de l'invention facilite grandement les procédures de préparation d'échantillon en vue de l'analyse des molécules qu'il contient, tout en permettant un parfait contrôle de la propreté et de la fiabilité de l'analyse de l'échantillon et en garantissant l'intégrité de l'analyse.

Le DPIE de l'invention présente également l'avantage d'être multifonctionnel, et permet de réaliser diverses méthodes et procédés d'extraction ou de transformation chimique et/ou physique, y compris la pyrolyse et la thermochemolyse, par exemple jusqu'à des températures de 1000°C, par exemple jusqu'à des températures de 600 °C. En outre, la diversité des procédés réalisables par le DPIE de l'invention permet d'effectuer plusieurs analyses différentes d'un même échantillon qui se complètent. Le dispositif de la présente invention ne se limite donc pas à la mise en oeuvre d'une simple pyrolyse de molécules organiques d'un échantillon, contrairement à la plupart des dispositifs de l'art antérieur.

Par ailleurs, le DPIE de l'invention peut permettre de nettoyer rigoureusement les chambres de préparation et/ou de focalisation avant chaque analyse, notamment grâce à sa fonction de pyrolyseur.

Avantageusement, le DPIE de l'invention permet d'appliquer à l'échantillon des conditions de température et de pression extrêmes. Le DPIE de l'invention peut être utilisé par exemple pour des intervalles de température allant de -195°C à 1000°C, par exemple de -100°C à 1000°C, par exemple de -50°C à 600°C, par exemple de 0°C à 600°C. Par ailleurs, le DPIE de l'invention peut être utilisé pour des intervalles de pression allant de 0,1 à 2.10⁵ kPa, par exemple de 0,1 à 200 kPa.

Enfin, le DPIE de la présente invention peut être compatible avec n'importe quelle technique d'analyse en phase gazeuse et adaptable avec des techniques séparatives en phase liquide comme par exemple la HPLC, l'électrophorèse capillaire, etc.

Le dispositif de préparation et d'injection d'échantillon permet par exemple la mise en oeuvre de procédés de préparation (I) et (II) d'un échantillon solide décrits ci-dessous puis la mise en oeuvre de procédés de focalisation (c'est-à-dire de concentration) et d'injection décrits ci-dessous.

Par exemple, le compartiment de préparation du DPIE de l'invention permet la mise en oeuvre des procédés (I) ou (II) suivants d'extraction, de fonctionnalisation et de volatilisation de molécules organiques :

Le procédé (I) dit « un lieu - une étape » (ou « one pot - one step ») peut comprendre les étapes suivantes :
(Ia) introduire dans la chambre de préparation un échantillon solide prélevé
(Ib) mettre la chambre de préparation sous une pression de 0,1 à 200 kPa ;
(Ic) élever en moins de 30 secondes, de préférence en moins de 15 secondes, la température de la chambre de préparation de la température de l'environnement de la chambre de préparation à une température T_{d} allant de 250°C à 1000°C, par exemple de 250°C à 600°C ;
(Id) maintenir la chambre de préparation à la température T_{d} pendant une durée D_{d} inférieure à 15 minutes afin de désorber par thermo-désorption les molécules organiques contenues dans l'échantillon solide ;
(Ie) diminuer, en moins de 30 secondes, de préférence en moins de 15 secondes, la température de la chambre de préparation de la température T_{d} à la température T_{f} allant de 50°C à 100°C ;
(If) ajouter dans la chambre de préparation au moins un agent de fonctionnalisation et au moins un solvant organique, et maintenir la chambre de préparation à la température T_{f} pendant une durée D_{f} inférieure à 1 heure, afin de faire réagir le mélange et de fonctionnaliser les molécules organiques désorbées ; et
(Ig) chauffer la chambre de préparation à une température Tᵥ allant de 140°C à 300°C pendant une durée Dᵥ inférieure à 1 heure afin de volatiliser les molécules organiques fonctionnalisées, la température Tᵥ étant de préférence atteinte en moins de 30 secondes, par exemple en moins de 15 secondes.

Le procédé (II) dit « one pot - two steps » peut comprendre les étapes suivantes :
(IIa) introduire dans la chambre de préparation un échantillon solide prélevé
(IIb) introduire dans la chambre de préparation un solvant organique ;
(IIc) mettre le mélange sous agitation à une température Tₑ allant de 20°C à 100°C pendant une durée De inférieure à 1 heure afin d'extraire des molécules organiques du solide ;
(IId) éliminer le solvant, par exemple le solvant peut être évaporé et évacué à l'aide d'un balayage de la chambre de préparation par un gaz inerte, le gaz inerte étant de préférence à une température de 30°C +/- 5°C ;
(IIf) ajouter dans la chambre de préparation au moins un agent de fonctionnalisation et au moins un solvant organique, et maintenir la chambre de préparation à la température T_{f} allant de 50°C à 100°C pendant une durée D_{f} inférieure à 1 heure afin de fonctionnaliser les molécules organiques extraites ;
(IIg) chauffer la chambre de préparation à une température Tᵥ allant de 140°C à 300°C pendant une durée Dᵥ inférieure à 1 heure afin de volatiliser les molécules organiques fonctionnalisées, la température Tᵥ étant de préférence atteinte en moins de 30 secondes, par exemple en moins de 15 secondes.

Chacun des procédés (I) ou (II) peut comprend en outre, pendant ou après l'étape (g) de volatilisation, une étape d'injection des molécules volatilisées dans un instrument d'analyse, par exemple une injection avec division (« split ») ou une injection sans division (« splitless »). Cette étape d'injection peut éventuellement être précédée d'une étape de focalisation.

Les étapes d'extraction, de fonctionnalisation, de volatilisation, de focalisation et d'injection réalisables à l'aide du DPIE de l'invention sont décrites ci-dessous.

Les étapes décrites ci-dessous peuvent comprendre en outre des phases d'élévation et/ou de diminution de température. L'élévation et/ou la diminution de température au cours de ces étapes peuvent être rapides, c'est-à-dire que la température de réaction ou de transformation requise pour chaque étape peut être atteinte en moins de 30 secondes, par exemple en moins de 15 secondes. Avantageusement, l'élévation et/ou la diminution de la température de la chambre de préparation et/ou de focalisation au cours des étapes décrites ci-dessous s'effectuer en une durée de 15 secondes +/- 10 secondes.

### Extraction de molécules organiques :

On entend par « extraction » la séparation des molécules organiques de la matrice solide ou liquide qui les contient. Par exemple, dans le cas d'un échantillon solide, les molécules organiques absorbées ou adsorbées à sa surface peuvent être fortement liées au solide et peuvent être très difficiles à extraire, d'où la nécessité de recourir à des méthodes d'extraction efficaces.

Le DPIE de la présente invention permet de réaliser l'extraction de molécules organiques dans la chambre de préparation. Par exemple, il peut s'agir d'une extraction à l'aide d'un solvant, par exemple une extraction liquide-liquide ou liquide-solide, ou d'une extraction par thermo-désorption.

L'extraction à l'aide d'un solvant peut être effectuée en agitant l'échantillon dans un solvant à la température d'extraction Tₑ favorisant la solubilisation des molécules organiques dans le solvant et pendant une durée Dₑ. Des moyens d'agitation utilisables avec le DPIE sont décris ci-dessus.

Le solvant peut être tout solvant connu de l'homme du métier permettant la solubilisation des molécules organiques présentes dans l'échantillon solide ou liquide.

A titre de solvant, on peut citer par exemple l'eau, les alcanes en C₁ à C₈, linéaires, ramifiés ou cycliques, les alcools R^{S}-OH où R^{S} est un radical alkyle en C₁ à C₈, par exemple l'isopropanol, les cétones R^{S1}-C(=O)-R^{S2}, les éthers R^{S1}-O-R^{S2}, où R^{S1} et R^{S2} sont indépendamment des radicaux alkyles en C₁ à C₈, formant éventuellement un cycle, le tétrahydrofurane, le dioxane, l'acétonitrile, le diméthylformamide (DMF), le diéthylformamide, le diméthylsulfoxyde, le toluène, l'acide acétique, l'acide formique, le dichlorométhane, le chloroforme, le dichloroéthane, l'acétate d'éthyle, ou un mélange de ceux-ci. On entend par « alkyle » un radical carboné linéaire, ramifié ou cyclique, saturé ou insaturé, éventuellement substitué, comprenant 1 à 8 atomes de carbone, par exemple 1 à 6 atomes de carbone.

On peut noter à titre d'exemple que le DMF et l'eau permettent la solubilisation et l'extraction de molécules organiques comme les acides aminés tandis que l'isopropanol permet la solubilisation et l'extraction d'autres molécules organiques cibles. Le volume de solvant utilisé peut être choisi de façon à immerger totalement l'échantillon.

La température d'extraction Tₑ peut être de 20°C à 100°C, par exemple de 50°C à 80°C.

La durée De peut être inférieure à 1 heure, par exemple de 10 à 30 minutes, par exemple de 10 à 20 minutes.

La pression Pₑ peut être de 0,1 à 2.10⁵ kPa. Par exemple, la pression Pₑ peut aller de 0,1 à 200 kPa, par exemple, de 10 à 200 kPa. Des moyens d'application d'une pression utilisable avec le DPIE sont décris ci-dessus.

L'extraction à l'aide d'un solvant peut éventuellement être réalisée sous agitation par ultrasons ou sous micro-ondes afin de faciliter l'extraction des molécules organiques. Des moyens permettant d'appliquer des ultrasons et micro-ondes avec le DPIE sont décris ci-dessus.

Une fois les molécules organiques extraites, le solvant peut être éliminé, par évaporation et/ou par entraînement au moyen d'un gaz inerte, sous l'une ou plusieurs des conditions suivantes :
- à une pression Pₑᵥ allant de 0,1 à 2.10⁵ kPa, par exemple de 0,1 à 200 kPa, par exemple de 10 à 100 kPa.
- à une température Tₑᵥ allant de 25 à 35°C, de préférence de 30°C +/-1°C, afin d'éviter l'évaporation des molécules organiques volatiles qui peuvent également être présentes dans l'échantillon ;
- sous un balayage de gaz inerte à un débit inférieur à 20 mL/minute, par exemple de 1 mL/minute.
les conditions d'évaporation ci-dessus étant réalisées pendant une durée Dₑᵥ inférieure à 40 minutes, par exemple de 15 à 30 minutes. Des moyens de balayage utilisables avec le DPIE sont décris ci-dessus.

On entend par « thermo-désorption » une méthode permettant de désorber des molécules organiques absorbées ou adsorbées sur un support solide, par chauffage à une température de désorption T_{d} et à une pression P_{d} pendant une durée D_{d}.

Selon l'invention, le DPIE permet d'appliquer une pression P_{d} dans la chambre de préparation allant de 0,1 à 2.10⁵ kPa. La pression P_{d} peut être choisie de façon à faciliter la désorption, par exemple, l'extraction par thermo-désorption peut être effectuée sous pression réduite. Par exemple, la pression P_{d}, peut aller de 0,1 à 100 kPa, par exemple de 10 à 100 kPa. Des moyens d'application d'une pression utilisable avec le DPIE sont décris ci-dessus.

Selon l'invention, le DPIE permet d'appliquer dans la chambre de préparation une température de désorption T_{d} élevée, c'est-à-dire qui peut aller de 250°C à 600°C. Par exemple, la température T_{d} peut être de 300 à 550 °C, par exemple de 300 à 500 °C. Avantageusement, la température T_{d} peut être de 500°C +/- 10°C, par exemple de 500°C +/-5°C.

La température de désorption T_{d} peut être maintenue pendant une durée D_{d} inférieure à 15 minutes, par exemple, inférieure à 5 minutes. Selon un autre mode de réalisation de l'invention, la durée D_{d} peut être de 5 minutes +/- 1 minute.

Le DPIE permet éventuellement de réaliser l'extraction par thermo-désorption sous ultrasons ou sous micro-ondes afin de faciliter la désorption des molécules organiques.

Le DPIE selon l'invention permet une élévation rapide de température, c'est-à-dire qu'elle peut s'effectuer en moins de 30 secondes, par exemple en moins de 15 secondes. Avantageusement, le DPIE de la présente invention permet d'élever la température de la chambre de préparation en 15 secondes +/- 10 secondes. Ceci permet de contrôler avec précision le temps pendant lequel l'échantillon est maintenu à température élevée. En effet, au-delà d'un certain temps à température élevée, les molécules peuvent être dégradées. Ainsi, une élévation de température trop lente peut engendrer la dégradation des molécules organiques. De la même façon, le DPIE permet une diminution de température rapide, c'est-à-dire qu'elle peut s'effectuer en moins de 15 secondes. Avantageusement, le DPIE de la présente invention permet de diminuer la température de la chambre de préparation en 15 secondes +/-10 secondes. Comme décrit précédemment, ceci permet de limiter les risques de dégradation des molécules organiques.

Ainsi, le DPIE de l'invention présente l'avantage de pouvoir utiliser la méthode par thermodésorption pour l'extraction de molécules organiques.

Le DPIE de l'invention permet une extraction par thermo-désorption rapide, ne nécessitant que quelques minutes. En effet, le DPIE de l'invention permet de réaliser une extraction en moins de 20 minutes, par exemple en moins de 15 minutes, par exemple en moins de 10 minutes.

De plus, le DPIE permet d'extraire et en particulier de désorber les molécules organiques de la matrice solide qui les contient sans les casser compte tenu de l'application possible de temps de chauffage très courts et de vitesses élevées de variations de températures, même pour des variations importantes de températures.

Le DPIE de l'invention permet également d'éviter l'utilisation de solvants, contrairement aux méthodes d'extraction généralement utilisées. En effet, les solvants sont généralement dangereux, néfastes pour l'environnement et/ou coûteux. De plus, ceci permet d'éviter l'étape supplémentaire d'élimination du solvant d'extraction. En outre, ceci permet d'éviter les pertes en molécules organiques extraites qui peuvent parfois être en partie entraînées avec le solvant d'extraction lors de son élimination.

Ainsi, avantageusement, le DPIE permet une extraction par thermo-désorption en une seule étape et en consommant moins d'énergie. En outre, il permet d'extraire de faibles quantités de molécules organiques. En effet, les dispositifs et méthodes d'extraction existants sont généralement utilisés pour des quantités relativement importantes d'échantillons et ne sont pas adaptés ni optimisés pour des échantillons présentant des molécules organiques à extraire en faibles quantités ou à l'état de traces.

Le DPIE permet une extraction par thermo-désorption en détachant les molécules organiques de la matrice solide de l'échantillon, que ces molécules soient volatiles ou non-volatiles. Ainsi, il permet en outre de séparer les molécules organiques volatiles des molécules organiques non-volatiles. En effet, les molécules organiques volatiles se retrouvant à l'état gazeux suite à la thermo-désorption, peuvent être évacuées hors de la chambre de préparation par un gaz de balayage, par exemple entraînées vers un instrument d'analyse, tandis que les molécules organiques non-volatiles restent dans la chambre de préparation pour y subir les étapes suivantes de fonctionnalisation et de volatilisation.

### Fonctionnalisation de molécules organiques extraites :

On entend par « fonctionnalisation » la transformation chimique de molécules organiques en introduisant au moins un groupe fonctionnel afin de modifier leurs propriétés physico-chimiques comme par exemple leur volatilité.

Ainsi, une fois les molécules organiques extraites de l'échantillon solide, elles peuvent être fonctionnalisées afin de les rendre plus volatiles.

La fonctionnalisation des molécules organiques extraites peut être réalisée en ajoutant à l'échantillon (dans la chambre de préparation, par exemple à l'aide du moyen d'introduction d'une substance liquide) au moins un agent de fonctionnalisation et au moins un solvant, et en maintenant le mélange à une température T_{f} pendant une durée D_{f}, afin de faire réagir les molécules organiques extraites avec au moins un agent de fonctionnalisation pour obtenir des molécules organiques fonctionnalisées.

La température T_{f} peut être de 50°C à 100°C. Par exemple, la température T_{f} peut aller de 60 à 90°C, par exemple de 75°C +/- 10°C, par exemple de 75°C +/- 5°C, par exemple de 75°C +/- 1°C.

L'agitation à la température T_{f} peut être maintenue pendant une durée D_{f} inférieure à 1 heure, par exemple pendant une durée D_{f} de 5 à 40 minutes, par exemple de 10 à 30 minutes.

On entend par « agent de fonctionnalisation » un réactif pouvant se substituer à des groupements ou hydrogènes labiles des molécules organiques pour donner des molécules fonctionnalisées. Ces molécules fonctionnalisées sont généralement plus volatiles. En effet, la fonctionnalisation peut diminuer la polarité des molécules organiques et rendre moins fortes les liaisons hydrogène présentes au sein des molécules permettant ainsi leur volatilisation à de plus faibles températures, par exemple de l'ordre de 200°C.

Dans le cadre de la présente invention, parmi les agents de fonctionnalisation utilisables, on peut distinguer les agents de fonctionnalisation permettant ou non la mesure chromatographique de la chiralité des molécules organiques fonctionnalisées. Cette mesure consiste à détecter et à déterminer qualitativement et quantitativement la présence éventuelle de molécules énantiomères dans l'échantillon. En effet, certains agents de fonctionnalisation peuvent par exemple comprendre un centre chirale, ce qui permet après réaction avec une molécule organique de détecter d'éventuels isomères de la molécule organique fonctionnalisée et donc d'identifier si la molécule organique initiale est chirale ou non.

L'agent de fonctionnalisation peut par exemple être choisi dans le groupe comprenant le *N*-Methyl-*N*-[tert-butyldimethyl-silyl]trifluoroacétamide (MTBSTFA), le *N*,*N*-diméthylformamide diméthylacétal (DMF-DMA), l'hydroxyde de tétraméthylammonium (TMAH), l'anhydride trifluoroacétique (TFAA), l'annhydride heptafluorobutyrique (HFBA), le 2,2,2-trifluoroéthanol, (TFE), le 2,2,3,3,4,4,4-heptafluoro-1-butanol (HFB), le chloroformate de méthyle (MCF), le chloroformate d'éthyle (ECF) ou un mélange de ceux-ci.

Le tableau 1 suivant présente, pour différents agents de fonctionnalisation, les actions ou substitutions possibles avec les groupements des molécules organiques à fonctionnaliser, ainsi que les propriétés ou non de mesurer la chiralité des molécules organiques.

**Tableau 1**

| **Agent de dérivatization** | **Action et Propriétés** |
|---|---|
| MTBSTFA | Tous H labile - pas de chiralité |
| TMAH | Tous composés organiques - pas de chiralité |
| DMF-DMA | Acide aminé - chiralité |
| MCF | H labile - chiralité |
| ECF | H labile - chiralité |
| TFAA + TFE | H labile - chiralité |
| HFBA + HFB | H labile - chiralité |

Le solvant peut être tout solvant connu de l'homme du métier permettant la réaction de fonctionnalisation des molécules organiques par l'agent de fonctionnalisation. Des exemples de solvants sont décrits précédemment.

Par ailleurs, on peut noter que le MTBSTFA est un agent de fonctionnalisation agressif pouvant avoir des conséquences sur la conception de l'enceinte et que le DMF est un solvant moins agressif que le MTBSTFA. Des matériaux inattaquables utilisables pour les parois internes de la chambre de préparation du DPIE sont décris ci-dessus.

L'étape de fonctionnalisation peut être réalisée à une pression P_{f} allant de 0,1 à 2.10⁵ kPa. Par exemple, la pression P_{f} peut être de 0,1 à 200 kPa, par exemple de 0,1 à 100 kPa, par exemple de 10 à 100 kPa. Des moyens permettant d'appliquer une pression utilisables avec le DPIE sont décris ci-dessus.

La fonctionnalisation des molécules organiques peut éventuellement être réalisée sous agitation. Par exemple, la fonctionnalisation peut être réalisée sous ultrasons ou sous micro-ondes afin de favoriser la réaction de fonctionnalisation des molécules organiques.

La fonctionnalisation nécessite une étape permettant d'atteindre la température de fonctionnalisation T_{f} qui peut être suivie d'une étape de stabilisation de la température où la température T_{f} est maintenue pendant une durée inférieure à 10 minutes, par exemple une durée de 2 à 5 minutes. Cette étape de stabilisation permet de laisser l'échantillon atteindre la température T_{f} avant l'ajout de l'agent de fonctionnalisation.

### Volatilisation de molécules organiques fonctionnalisées :

On entend par « volatilisation » le passage des molécules organiques à l'état gazeux.

Le DPIE de la présente invention permet de réaliser la volatilisation des molécules organiques fonctionnalisées notamment en vue de leur analyse.

L'étape de volatilisation des molécules organiques fonctionnalisées peut être réalisée dans la chambre de préparation du DPIE de l'invention par chauffage des molécules organiques de l'échantillon à une température de volatilisation Tᵥ pendant une durée Dᵥ.

La température Tᵥ peut être de 140°C à 300°C. Par exemple, la température Tᵥ peut être de 180 à 200°C. Avantageusement, la température Tᵥ peut être de 200°C +/- 20°C, par exemple de 200°C +/-10°C.

La température Tᵥ peut être maintenue pendant une durée Dᵥ inférieure à 1 heure. Par exemple, la température Tᵥ peut être maintenue pendant une durée Dᵥ de 10 à 30 minutes.

La volatilisation des molécules organiques fonctionnalisées peut être effectuée à une pression Pᵥ allant de 0,1 à 2.10⁵ kPa. Par exemple, la volatilisation peut être réalisée sous pression réduite, par exemple à une pression Pᵥ allant de 0,1 à 200 kPa, par exemple de 10 à 100 kPa. Des moyens permettant d'appliquer une pression utilisable avec le DPIE sont décris ci-dessus.

L'étape de volatilisation peut comprendre en outre une étape d'élévation de température à la température Tᵥ, qui peut être rapide. En d'autres termes, la température Tᵥ peut être atteinte en moins de 30 secondes, par exemple en moins de 15 secondes. Avantageusement, l'élévation de la température de l'échantillon à la température Tᵥ peut s'effectuer en une durée de 15 secondes +/- 10 secondes.

On peut noter que l'étape de volatilisation peut être suivie en contrôlant la pression dans la chambre de préparation au moyen d'un capteur de pression. En effet, la mesure de la pression peut être un indicateur de la quantité de molécules organiques volatilisées.

### Volatilisation de molécules organiques extraites par pyrolyse :

Le DPIE de l'invention permet également de volatilisation des molécules organiques extraites de l'échantillon par pyrolyse, c'est-à-dire par décomposition des molécules organiques en fragments volatils par chauffage.

L'étape de volatilisation par pyrolyse des molécules organiques fonctionnalisées peut réalisée dans la chambre de préparation du DPIE de l'invention par chauffage des molécules organiques de l'échantillon à une température de pyrolyse Tₚ pendant une durée Dₚ.

La température Tₚ peut être de 400°C à 1000°C, par exemple de 600 à 1000°C, par exemple de 900 à 1000°C.

La température Tₚ peut être maintenue pendant une durée Dₚ inférieure à une heure, par exemple pendant une durée Dₚ de 1 seconde à 5 minutes.

La volatilisation des molécules organiques fonctionnalisées peut être effectuée à une pression Pₚ allant de 0,1 à 2.10⁵ kPa. Par exemple, la volatilisation par pyrolyse peut être réalisée à pression atmosphérique ou sous pression réduite, par exemple à une pression Pₚ allant de 0,1 à 200 kPa, par exemple de 10 à 100 kPa.

### Volatilisation de molécules organiques extraites par thermochemolyse :

Le DPIE de l'invention permet également de volatiliser des molécules organiques extraites de l'échantillon par thermochemolyse, c'est-à-dire par pyrolyse en présence d'un agent alkylant des molécules organiques extraites. Cette technique analytique complémentaire permet par exemple d'améliorer le taux de conversion des molécules organiques en minimisant les réactions secondaires telles les décarboxylations d'acides aromatiques ou de dégrader des parties de molécules organiques résistantes dans les conditions classiques de pyrolyse. En outre, la possibilité du DPIE d'utiliser de ces deux techniques peut permettre de distinguer les molécules organiques liées à la matrice par liaisons covalentes de celles qui sont piégées dans le réseau macromoléculaire.

La thermochemolyse des molécules organiques extraites peut être réalisée en ajoutant à l'échantillon (dans la chambre de préparation, par exemple à l'aide du moyen d'introduction d'une substance liquide) au moins un agent alkylant et au moins un solvant, et en maintenant le mélange à une température T_{tc} pendant une durée D_{tc}, afin de faire réagir les molécules organiques extraites avec l'agent alkylant pour obtenir des fragments alkylés des molécules organiques de l'échantillon.

La température T_{tc} peut être de 100°C à 1000°C, par exemple de 200 à 700°C, par exemple de 300 à 500°C.

La température T_{tc} peut être maintenue pendant une durée D_{tc} inférieure à une heure, par exemple pendant une durée D_{tc} de 30 seconde à 30 minutes.

La thermochemolyse peut éventuellement être réalisée sous agitation afin de faciliter la réaction des molécules organiques avec l'agent alkylant. Des moyens d'agitation dans le DPIE sont décris ci-dessus.

La thermochemolyse des molécules organiques extraites peut être effectuée à une pression P_{tc} allant de 0,1 à 2.10⁵ kPa. Par exemple, la volatilisation par pyrolyse peut être réalisée à pression atmosphérique ou sous pression réduite, par exemple à une pression P_{tc} allant de 0,1 à 200 kPa, par exemple de 10 à 100 kPa.

On entend par « agent alkylant » un réactif pouvant s'additionner à des groupements électronégatifs de molécules organiques pour donner des fragments alkylés de ces molécules organiques. Ces fragments alkylés de molécules organiques sont généralement plus volatiles.

Dans le cadre de la présente invention, parmi les agents alkylants utilisables, on peut citer par exemple l'hydroxyde de tétraméthylammonium (TMAH), l'hydroxyde de tétrapropylammonium (TPAH), l'acétate de tétraéthylammonium (TEAAc) ou un mélange de ceux-ci.

Le solvant peut être tout solvant connu de l'homme du métier permettant la réaction des molécules organiques avec l'agent alkylant. Des exemples de solvants sont décrits précédemment.

Ainsi, quelle que soit les méthodes ou étapes utilisées, le DPIE de l'invention permet d'effectuer en un même lieu (la chambre de préparation) l'extraction (à l'aide d'un solvant ou par thermo-désorption), la fonctionnalisation et la volatilisation (par chauffage des molécules fonctionnalisées ou par pyrolyse ou thermochemolyse des molécules organiques extraites) des molécules organiques contenues dans un échantillon solide.

Les molécules organiques ou fragments de molécules organiques volatilisés sont ensuite transférés dans la chambre de focalisation du DPIE, notamment à l'aide d'un gaz de balayage, afin d'être injectés dans un instrument d'analyse de façon ponctuelle et de façon concentrée si nécessaire.

### Transfert de molécules organiques volatilisées dans la chambre de focalisation et infection :

Le transfert des molécules organiques volatilisées dans la chambre de focalisation peut être effectué après ou pendant l'étape de volatilisation, par exemple au fur et à mesure de l'apparition de molécules organiques volatilisées dans la chambre de préparation.

Le transfert des molécules organiques volatilisées peut être par exemple effectué par aspiration ou par entraînement au moyen d'un gaz inerte. De préférence, le transfert peut être réalisé par entraînement au moyen d'un balayage par un gaz inerte afin de pousser les molécules organiques volatilisées vers la chambre de focalisation puis vers l'instrument d'analyse. Des gaz inertes et des moyens de balayage utilisables avec le DPIE sont par exemple décris ci-dessus.

Le balayage par le gaz inerte peut être réalisé à la température de volatilisation Tᵥ pendant une durée Dₜ inférieure à 40 minutes, par exemple de 10 à 30 minutes.

Le balayage par le gaz inerte peut être réalisé à une pression Pₜ allant de 0,1 à 2.10⁵ kPa, par exemple de 0,1 à 200 kPa, par exemple de 0,1 à 100 kPa, par exemple de 10 à 100 kPa. Des moyens permettant d'appliquer une pression utilisables avec le DPIE sont décris ci-dessus.

Le balayage par le gaz inerte peut être continu. Par exemple, il peut s'agir d'un balayage avec un écoulement laminaire. Par exemple, le balayage peut être effectué à un débit allant de 1 à 10 mL/minute.

### Focalisation des molécules organiques ou fragments de molécules organiques transférés :

On entend par « focalisation » ou « concentration » l'action d'augmenter la proportion de molécules organiques volatilisées dans la chambre de focalisation en piégeant les molécules volatilisées dans la chambre de focalisation lors de leur transfert par le gaz de balayage. Par exemple, les molécules organiques peuvent être piégées par condensation des molécules volatilisées en abaissant la température de la chambre de focalisation à l'aide d'un moyen de refroidissement. Les molécules organiques volatilisées se condensent alors (c'est-à-dire qu'elles passent de leur état gazeux à un état liquide ou solide) sur les parois internes de la chambre de focalisation. Des moyens de refroidissement utilisables pour le DPIE sont par exemple décrits ci-dessus.

Les molécules organiques peuvent également être piégées par un adsorbant présent dans la chambre de focalisation, par exemple présent sur les parois internes de la chambre de focalisation. Des exemples d'adsorbants utilisables dans le DPIE de l'invention sont décrits ci-dessus.

La concentration des molécules organiques (par condensation et/ou par adsorption) peut être effectuée à une température T_{c} pendant une durée D_{c} au cours du balayage de la chambre, afin de piéger les molécules organiques transférées dans la chambre de focalisation.

La température T_{c} peut être de -180°C à 30°C, par exemple de - 80°C à 0°C.

La température T_{c} peut être maintenue pendant une durée D_{c} inférieure à 1 heure, par exemple pendant une durée D_{c} de 1 minute à 30 minutes.

La concentration des molécules organiques peut être effectuée à une pression P_{c} allant de 0,1 à 2.10⁵ kPa.

La concentration est ensuite suivie d'une étape de volatilisation et/ou de désorption des molécules organiques en vue de les injecter (sous leur forme gazeuse) dans un instrument d'analyse. Par exemple, les molécules organiques piégées peuvent à nouveau être volatilisées par chauffage à l'aide du moyen de chauffage de la chambre de focalisation. Les molécules adsorbées peuvent également être détachées de l'adsorbant par élévation de température (thermodésorption) ou par la diminution de la pression.

### Injection des molécules organiques ou fragments de molécules organiques volatilisés :

On entend par « injection » l'action de transférer de façon ponctuelle les molécules organiques volatilisées dans un instrument d'analyse. L'injection dans l'instrument d'analyse à l'aide du DPIE de l'invention peut être effectuée avec division (« split ») ou sans division (« splitless ») comme décrit ci-dessus.

L'injection des molécules organiques volatilisées dans le gaz de balayage peut être effectuée à une température Tᵢ pendant une durée Dᵢ.

La température Tᵢ peut être de 50°C à 400°C, par exemple de 200 à 300°C.

La température Tᵢ peut être maintenue pendant une durée Dᵢ inférieure à 30 minutes, par exemple pendant une durée Dᵢ de 0,1 seconde à 10 secondes. Par exemple, pour une injection selon une programmation de température, l'injection peut être étalée dans le temps et consister en des injections ponctuelles par incrément de température.

L'injection des molécules organiques peut être effectuée à une pression Pᵢ allant de 50 à 200 kPa, par exemple de 100 à 150 kPa.

Plus particulièrement, le débit de l'injection peut être de 1 à 1,5 mL/min.

D'autres avantages pourront encore apparaître à l'homme du métier à la lecture des exemples non-limitatifs ci-dessous, illustrés par les figures annexées.

### Brève description des figures

- La figure 1 est une vue schématique en coupe latérale représentant le DPIE (1) de l'exemple 1.
- Les figures 2A et 2B représentent respectivement les compartiments (2a) et (2b) du DPIE représenté en figure 1.
- La figure 3 est une vue schématique latérale du dispositif de préparation et d'injection d'échantillon (DPIE) selon l'exemple 1. Les dimensions du dispositif sont données en mm.
- La figure 3A est une vue schématique en coupe latérale du dispositif de préparation et d'injection d'échantillon (DPIE) selon l'exemple 1. Les dimensions du dispositif sont données en mm.
- La figure 3B est un agrandissement de la partie B représentée en figure 3A et représente la partie supérieure du bouchon (30).
- La figure 3C est un agrandissement de la partie C représentée en figure 3A et représente l'ouverture (9) de la chambre de préparation (3a).
- La figure 3D est un agrandissement de la partie D représentée en figure 3A et représente la sortie (10) de la chambre de préparation (3a).
- La figure 3E est un agrandissement de la partie E représentée en figure 3A et représente la sortie du compartiment d'injection, permettant de relier la sortie de la chambre de focalisation (12) à un instrument d'analyse.
- Les figures 4A et 4B sont respectivement des vues schématiques latérale et en perspective du DPIE (1) de l'invention.
- La figure 5 est un schéma représentant le système d'analyse de l'exemple 2 comprenant le DPIE (1) de l'invention et l'instrument d'analyse par CPG (18).
- La figure 6 représente le chronogramme synthétisant les différents cycles de température en fonction du temps de l'expérience pour l'expérimentation « un lieu / deux étapes ».
- La figure 7 représente le chromatogramme issu de l'analyse chromatographique couplée à la spectrométrie de masse de l'échantillon de 0,5 g de sol du désert d'Atacama après le procédé « un lieu / deux étapes ».
- La figure 8 représente le chronogramme synthétisant les différents cycles de température en fonction du temps de l'expérience pour l'expérimentation « un lieu / une étape ».
- La figure 9 représente le chromatogramme issu de l'analyse chromatographique couplée à la spectrométrie de masse de l'échantillon de 0,5 g de sol du désert d'Atacama après le procédé « un lieu / une étape ».

### EXEMPLES

### Exemple 1 : Dispositif de Préparation et d'injection d'Echantillon

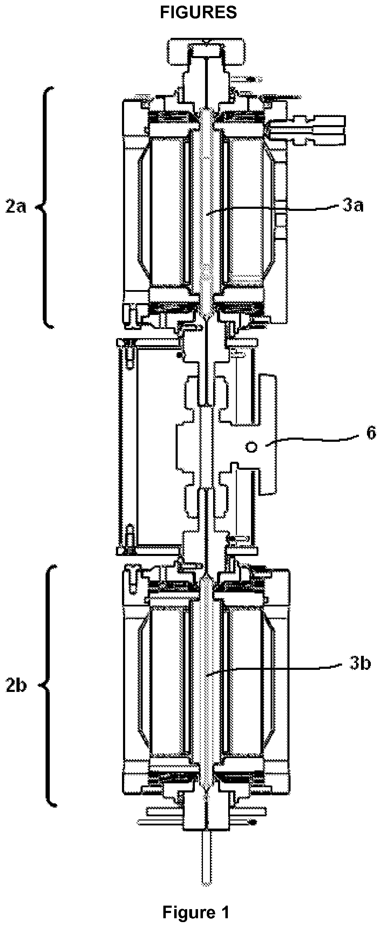

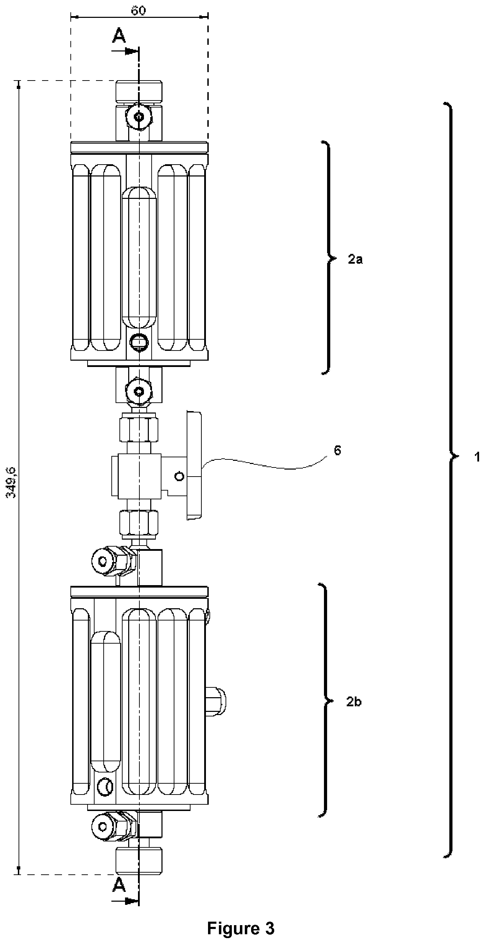

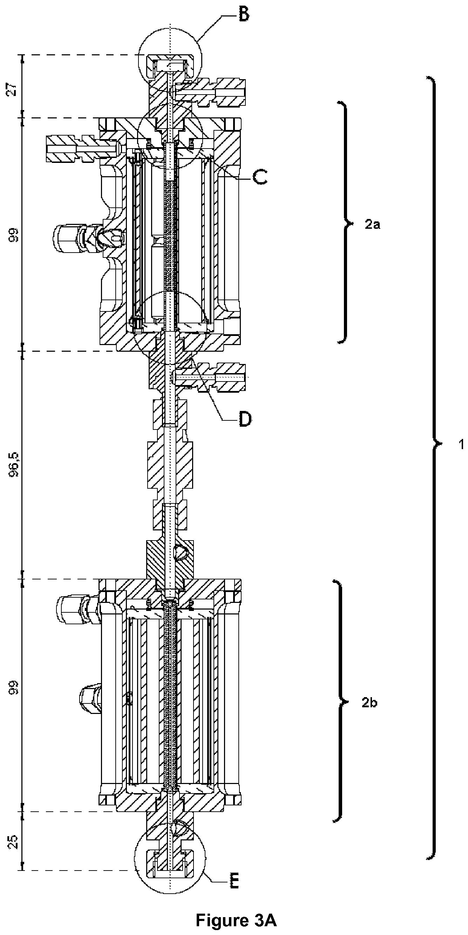

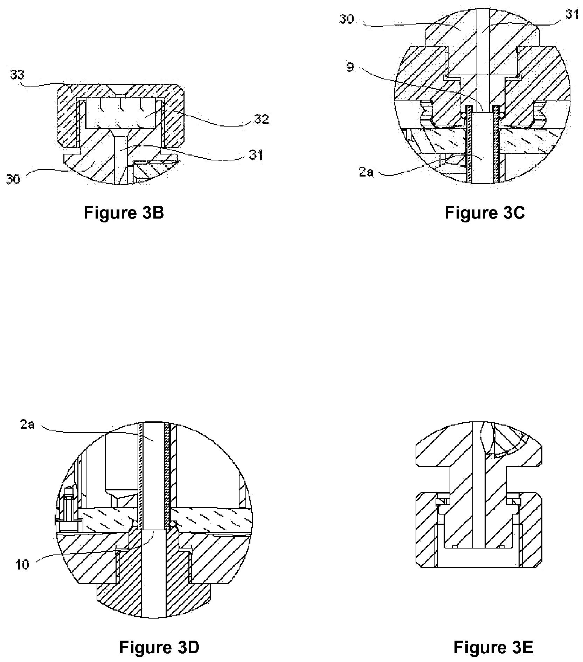

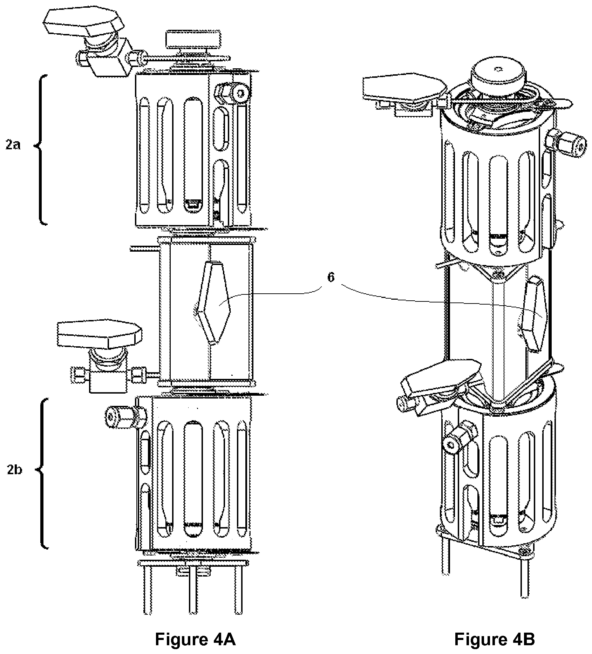

Un exemple de dispositif de préparation et d'injection d'échantillon selon la présente invention a été réalisé et est illustré par les figures 1 à 4.

La figure 1 représente un dispositif (1) de préparation et d'injection d'échantillon (DPIE) selon l'invention, comprenant un compartiment de préparation d'échantillon (2a) et un compartiment d'injection (2b).

Les compartiments (2a) et (2b) sont en titane. Les dimensions de ces compartiments sont données en figure 1A. Les compartiments (2a) et (2b) peuvent être solidarisés ou désolidarisés l'un à l'autre par des clips (non représenté).

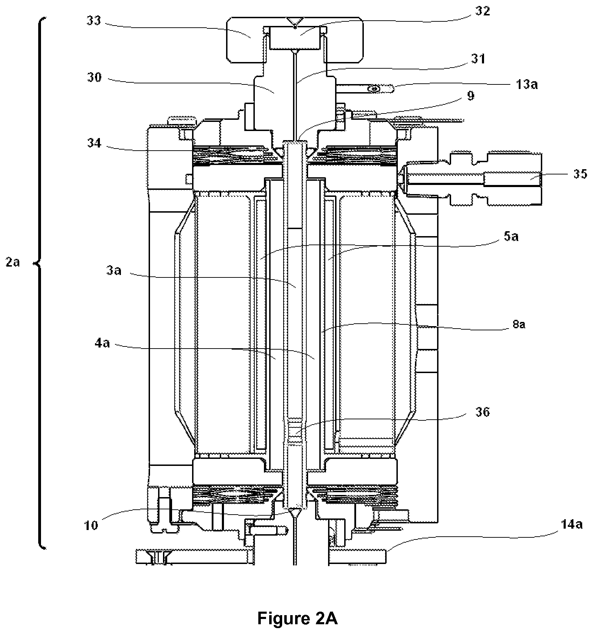

Le compartiment de préparation d'échantillon (2a) est représenté en figure 2A et comprend un moyen de chauffage (4a), un moyen de refroidissement (5a) et une chambre de préparation (3a) en forme de tube (ou « liner »). Le compartiment de préparation (2a) comprend également un capteur de température (8a).

La chambre de préparation (3a) est un liner en quartz avec fritté (36) commercialisé par la société AtasGL (Hollande) sous la référence A100001.

L'échantillon à analyser est introduit manuellement dans la chambre de préparation (3a) par l'ouverture étanche (9) fermée par un bouchon (30) par vissage. Le bouchon est traversé par un capillaire (31) et muni d'un septum (32). Le capillaire bouché par le septum constitue ainsi le moyen d'introduction d'une substance liquide dans la chambre de préparation, par exemple un réactif de fonctionnalisation.

La chambre (3a) présente en outre une entrée (13a) de gaz de balayage, une sortie (10) vers la chambre de focalisation et une sortie (14a) de gaz de balayage permettant l'évacuation du gaz à l'extérieur du DPIE.

Le moyen de chauffage (4a) est un élément chauffant avec extrémité froide réalisé sur mesure par la société Thermocoax. La forme cylindrique creuse de ce moyen de chauffage épouse parfaitement la forme en tube de la chambre de préparation (3a).

Le moyen de refroidissement (5a) est constitué d'une cavité entourant l'élément chauffant et permettant la circulation d'un gaz de refroidissement et reliée à un réservoir (35) de gaz de refroidissement (CO₂ ou N₂).

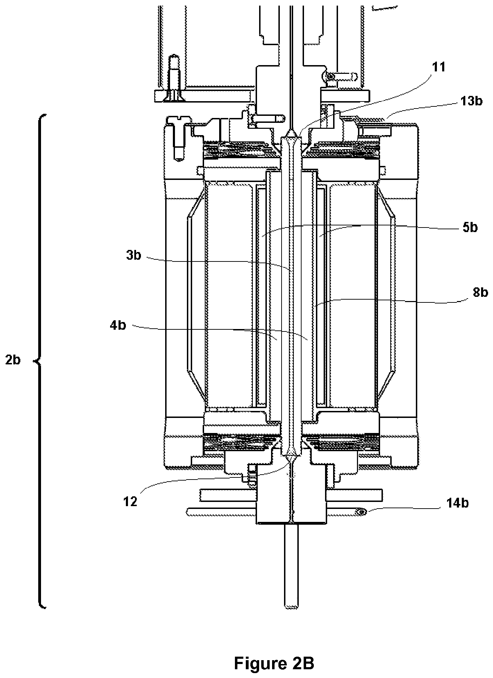

Le compartiment d'injection (2b) est représenté en figure 2B et comprend un moyen de chauffage (4b), un moyen de refroidissement (5b), et une chambre de focalisation (3b) en forme de tube (ou « liner »). Le compartiment d'injection (2b) comprend également un capteur de température (8b).

La chambre de focalisation (3b) est un liner simple en quartz de 5 mm de diamètre commercialisé par la société AtasGL (Hollande) sous la référence A100049.

La chambre de focalisation (3b) présente une entrée (11) reliée à la sortie (10) de la chambre de préparation et séparée de cette sortie par une vanne (6). La chambre de focalisation présente en outre une entrée (13b) de gaz de balayage, une sortie (14b) de gaz de balayage permettant l'évacuation du gaz à l'extérieur du DPIE et une sortie (12) qui peut être reliée à un instrument d'analyse.

Le moyen de chauffage (4b) est un élément chauffant avec extrémité froide réalisé sur mesure par la société Thermocoax. La forme cylindrique creuse de ce moyen de chauffage épouse parfaitement la forme en tube de la chambre de focalisation (3b).

Le moyen de refroidissement (5b) est constitué d'une cavité entourant l'élément chauffant et permettant la circulation d'un gaz de refroidissement et reliée à un réservoir de gaz de refroidissement (CO₂ ou N₂).

La vanne (6) est une vanne réglable en acier inoxydable commercialisée par la société Parker sous la référence 22204.

Les moyens de commande (7) et de contrôle (8a) et (8b) de la température sont des sondes PT 100 commercialisées par la société Rosemount Aerospace sous la référence 0118MF2000A. Elles sont situées respectivement le long des éléments de chauffage thermocoax (4a) et (4b). Elles sont reliées à un moyen de commande comprenant le logiciel LabVIEW et une carte d'acquisition NI PCI-4351).

Le dispositif comprend en outre deux capteurs de pression PA-21 SR / 5bar 805203 commercialisés par la société Meiri (France). Ces capteurs sont situés en entrée (13a) du gaz de balayage de la chambre de préparation et en entrée (13b) de la chambre de focalisation.

L'invention est décrite dans ce qui précède à titre d'exemple. Il est entendu que l'homme du métier est à même de réaliser différentes variantes de réalisation de l'invention sans pour autant sortir du cadre de l'invention.

### Exemple 2 : Système d'analyse comprenant un Dispositif de Préparation et d'Injection d'Echantillon selon l'invention

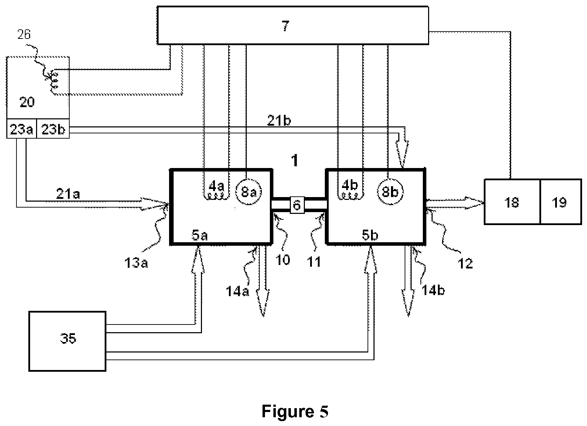

Un système d'analyse selon l'invention a été réalisé avec le DPIE de l'exemple 1 et est représenté sur la figure 5.

Le système d'analyse comprend le dispositif de préparation et d'injection d'échantillon (1), selon l'invention, connecté à un chromatographe en phase gazeuse (18), couplé à un spectromètre de masse (19).

Afin de permettre l'acheminement des molécules organiques volatilisées dans la chambre de préparation (3a) vers la chambre de focalisation (3b) puis vers l'instrument d'analyse (18), le système est équipé d'un circuit de balayage comprenant un réservoir (20) de gaz inerte, une première canalisation (21a) connectant le réservoir (20) à l'entrée (13a) du dispositif (1) via une vanne (23a), une seconde canalisation (21b) connectant le réservoir (20) à l'entrée (13b) du dispositif (1) via une vanne (23b) et une troisième canalisation (22) connectant la sortie (12) du DPIE (1) à l'instrument d'analyse (18).

Le réservoir (20) est équipé d'un moyen de chauffage (26) du gaz inerte connecté à l'unité de commande (7).

Le DPIE et le système d'analyse sont illustrés par les figures 1 à 5, sur lesquelles la signification des références est la suivante :
1 : dispositif de préparation et d'injection d'échantillon (DPIE)
2a : compartiment de préparation
2b : compartiment d'injection
3a : chambre de préparation
3b : chambre de focalisation
4a : élément chauffant cylindrique (thermocoax) du compartiment de préparation (2a)
4b : élément chauffant cylindrique (thermocoax) du compartiment d'injection (2b)
5a : cavité du compartiment (2a) permettant la circulation d'un gaz de refroidissement (CO₂ ou N₂)
5b : cavité du compartiment (2b) permettant la circulation d'un gaz de refroidissement (CO₂ ou N₂)
6 : vanne en acier inoxydable
7 : unité de commande (moyen de contrôle de la température)
8a : capteur de température du compartiment (2a)
8b : capteur de température du compartiment (2b)
9 : ouverture permettant l'introduction d'un échantillon
10 : sortie de la chambre de préparation (3a) reliée à l'entrée (11) de la chambre de focalisation (3b)
11 : entrée de la chambre de focalisation (3b) reliée à l'entrée (10) de la chambre de préparation (3a)
12 : sortie de la chambre de focalisation reliée à un instrument d'analyse par CPG (18) permettant le transfert de molécules volatilisées vers l'instrument d'analyse
13a : entrée permettant la circulation du gaz de balayage dans la chambre de préparation (3a)
13b : entrée permettant la circulation du gaz de balayage dans la chambre de focalisation (3b)
14a : sortie permettant l'évacuation du gaz de balayage vers l'extérieur du DPIE
14b : sortie permettant l'évacuation du gaz de balayage vers l'extérieur du DPIE
15 : moyen de commande de la pression
16 : moyen de contrôle de la pression
17 : moyen permettant de faire le vide ou d'appliquer une pression dans la chambre de focalisation et/ou dans la chambre de préparation
18 : instrument d'analyse par CPG (Chromatographie en Phase Gazeuse)
19 : Spectromètre de masse
20 : réservoir de gaz de balayage (gaz inerte)
21a : canalisation connectant le réservoir de gaz (20) à l'entrée étanche (13a) de la chambre de préparation (3a) via une vanne (23a).
21b : canalisation connectant le réservoir de gaz (20) à l'entrée étanche (13b) de la chambre de focalisation (3b) via une vanne (23b).
22 : canalisation connectant la sortie 12 de la chambre de focalisation (3b) à l'instrument d'analyse (18).
23a : vanne de la canalisation (21a) reliant l'entrée étanche (13a) de la chambre de préparation (3a) au réservoir de gaz (20)
23b : vanne de la canalisation (21b) reliant l'entrée étanche (13b) de la chambre de focalisation (3b) au réservoir de gaz (20)
26 : moyen de chauffage du gaz de balayage
30 : bouchon de l'ouverture (9) en acier inoxydable
31 : capillaire passant à travers le bouchon 30 et débouchant dans la chambre de préparation, permettant l'introduction d'une substance liquide dans la chambre de préparation (3a)
32 : septum placé sur le bouchon 30 et coopérant avec le capillaire 31, permettant l'introduction d'une substance liquide via une seringue.
33 : vis de serrage
34 : joint souple
35 : entrée du fluide de refroidissement reliée à un réservoir de fluide de refroidissement et débouchant dans la cavité 5a du compartiment de préparation
36 : fritté présent dans la chambre de préparation (3a) et permettant de retenir l'échantillon dans ladite chambre.

### Exemple 3 : Exemple de fabrication du DPIE

Dans cet exemple, le DPIE (1) a été réalisé par moulage des compartiments (2a) et (2b). Le métal en fusion (titane) est coulé pour remplir deux moules ayant la forme des compartiments (2a) et (2b) du DPIE. Dans cet exemple, le DPIE est fabriqué à partir d'inox 316L ou de titane selon un usinage traditionnel à pression atmosphérique (c'est-à-dire à une pression de 100 kPa +/- 5 kPa) et à température ambiante (c'est-à-dire à une température allant de 20 à 25°C). Les autres composants du dispositif de l'invention sont issus du commerce et décrits ci-dessus.

### Exemple 4 : Exemple d'application du DPIE : réalisation du procédé «un lieu - deux étapes » (ou « one pot - two steps »)

Dans cet exemple, un procédé d'extraction, de fonctionnalisation et de volatilisation de molécules organiques contenues dans un échantillon solide est réalisé à l'aide du DPIE de l'exemple 1.

L'analyse d'un échantillon de sol du désert d'Atacama au Chili (analogue de sol martien) est effectuée suivant le protocole « un lieu - deux étapes » décrit ci-dessous.

En outre, l'utilisation d'un sol parfaitement caractérisé (sol Atacama) sert ici de référence pour comparer les performances du DPIE avec celles des techniques d'extraction classiques de laboratoire. L'objectif est de démontrer la faisabilité de l'extraction, de la fonctionnalisation de la volatilisation et de l'injection des molécules organiques contenues à l'état de traces dans un échantillon de sol. Le bon fonctionnement du DPIE est évalué par l'analyse CPG-SM en aval.

### Protocole :

Les étapes E1 à E6 suivantes sont réalisées successivement.

### E1. Nettoyage et conditionnement du DPIE :

Un état de propreté en deçà de la limite de sensibilité du CPG-SM a été établi à l'intérieur des chambres de préparation et de focalisation du DPIE afin de s'assurer que le seuil de résidus présents dans le DPIE ne perturbera pas la détection chimique réalisée par le CPG-SM.

La limite de propreté est estimée à 10⁻¹⁵ mole pour un volume de la chambre de préparation ou la chambre de focalisation de 0,5 mL.

Notons que cette fonction n'est pas utile si la chambre de préparation et la chambre de focalisation sont dans un état de propreté satisfaisant avant introduction de l'échantillon (comme c'est le cas d'une enceinte utilisable une seule fois par exemple).

Le conditionnement est réalisé simultanément par chauffage et balayage par un gaz inerte de l'intérieur du DPIE comme suit :
- la température de la chambre de préparation est élevée de 20°C (température du laboratoire) à 500°C en 15 secondes au moyen du thermocoax (4a).
- la température de la chambre de préparation est maintenue à 500°C et un balayage par de l'hélium est effectué pendant 10 minutes au moyen de l'entrée (13a) et de la sortie (14a) permettant la circulation du gaz. Ceci permet d'effectuer une pyrolyse et d'éliminer simultanément les résidus de pyrolyse par entraînement au moyen du gaz inerte. Les caractéristiques du balayage sont les suivantes :

| **Critères** | **Caractéristiques** |
|---|---|
| Gaz inerte | hélium |
| Caractéristiques de propreté du gaz | Alpha 2 |
| Débit de gaz | 1,5 ml/min |
| Stabilité du débit | ± 10 % (afin d'éliminer les résidus de pyrolyse) |
| Température du gaz à l'entrée | 500°C (afin d'éviter la chute de la température de pyrolyse) |
| Caractéristiques de l'entrée de gaz | 1 mL/min |
| Caractéristiques de la sortie de gaz | 1 mL/min |
| Espace balayé | Intérieur de la chambre de préparation |
| Durée du balayage | 10 min |
| Caractéristiques physiques du dispositif d'introduction du gaz | Raccord standard étanche |
| Caractéristiques physiques du dispositif de rejet du gaz | Raccord standard étanche sans filtrage |

Afin de vérifier la propreté de l'appareil après la pyrolyse et la non présence de résidus ou de molécules organiques dans la chambre de préparation, un test à vide peut être effectué. Ce test consiste à exécuter les étapes E3 à E6 décrites ci-après mais sans échantillon.

Les conditions de propreté requises au cours des différentes opérations suivantes sont données par la limite de détection du CPG-MS qui est de 10⁻¹⁵ mole.

Par ailleurs, les conditions de propreté requises pour l'analyse d'échantillons requièrent d'avoir un dispositif d'introduction d'échantillon respectant ce critère de propreté de 10⁻¹⁵ mole. Dans cet exemple, l'étape suivante d'introduction d'échantillon a été réalisée manuellement sous hotte à flux laminaire.

### E2. Introduction de l'échantillon :

L'échantillon à analyser est introduit manuellement, à l'aide d'une spatule métallique, au travers du liner du compartiment de préparation (2a). Les caractéristiques de l'échantillon (Atacama, chili) sont les suivantes :

| **Critères** | **Caractéristiques** |
|---|---|
| Composition chimique de l'échantillon | sable contenant des molécules organiques à l'état de trace |
| Granulométrie de l'échantillon | 100 à 250µm |
| Masse de l'échantillon | 0,5 g |
| Volume de l'échantillon | environ 0,3 mL |
| Propriétés et forme de l'échantillon | Solide et sec |
| Caractéristiques du lieu de dépôt de l'échantillon au sein du dispositif | - Dépôt reproductible (au fond du « liner ») |
| Condition de propreté requise au cours de cette opération | - Limite de détection du CPG-MS : 10⁻¹⁵ mole |
| | - Recours à un dispositif d'introduction respectant ce critère |
| Température de la chambre de préparation en début d'introduction | Ambiante (25 °C) |

Une fois l'échantillon introduit, la chambre de préparation est refermée à l'aide du bouchon en inox (30). La température et la pression de l'échantillon sont contrôlées et sont respectivement de 25°C et de 1 bar.

### E3. Extraction à l'aide d'un solvant :

Le solvant d'extraction est introduit à température ambiante dans la chambre de préparation au moyen d'une seringue par le moyen d'introduction de l'échantillon. Les caractéristiques du solvant sont les suivantes :

| Nature du solvant | Eau - Isopropanol (1 :1) |
|---|---|
| Volume | 1 mL (soit 0,5 mL d'eau et 0,5 mL d'isopropanol) |

### E4. Elimination du solvant d'extraction :

Le solvant est éliminé par évaporation à l'aide d'un balayage de l'enceinte par un gaz à une température modérée au moyen de l'entrée (13a) et de la sortie (14a) permettant la circulation du gaz. On peut noter que les molécules organiques à analyser ne sont pas entraînées au cours du balayage compte tenu du chauffage modéré d'une part et de leur propriété réfractaire, c'est-à-dire non volatile d'autre part. L'ouverture et la fermeture de l'orifice d'évacuation du gaz sont commandées manuellement. Les caractéristiques du balayage sont les suivantes :

| Température du gaz fourni en entrée | 30 °C (pour éviter l'évaporation des molécules organiques volatiles) |
|---|---|
| Gaz utilisé pour le balayage | Hélium |
| Propreté du gaz | Alpha 2 |
| Débit du gaz | 1 mL/min |
| Durée du balayage et du maintien en température | 15 min |
| Température intérieure de la chambre de préparation | 30°C |

Eventuellement, une grille de protection placée en sortie du gaz permet de conserver l'échantillon à l'intérieur de la chambre de préparation.

### E5. Fonctionnalisation des molécules organiques extraites :

Une solution comprenant un agent de fonctionnalisation est ensuite introduite dans la chambre de préparation afin de fonctionnaliser les molécules organiques extraites et de les rendre volatiles. L'agent de fonctionnalisation est introduit dans la chambre de préparation, après que la température de celui-ci soit ramenée à 20°C. L'introduction de l'agent de fonctionnalisation est effectuée au moyen d'une seringue par le moyen d'introduction de l'échantillon (9).

La solution utilisée ici est une solution de MTBSTFA dans le DMF obtenue en mélangeant 30 µL de MTBSTFA commercialisé sous la référence 19915 par la société Sigma-Aldrich, France et 10 µL de DMF commercialisé sous la référence 227056 par la société Sigma-Aldrich, France.

Les caractéristiques et quantités de solution d'agent de fonctionnalisation introduites sont les suivantes :

| Solution d'agent de fonctionnalisation | Une solution de MTBSTFA pur (30 µL) dans le DMF pur (10 µL) |
|---|---|
| Volume de solution introduit | 40 µL |

La température de la chambre de préparation est ensuite élevée à la température T_{f} de 75°C +/- 5°C en une durée de 3 minutes +/- 1 minute.

Puis, la température T_{f} est maintenue pendant une durée de 15 minutes +/- 1 minute afin de réaliser la réaction de fonctionnalisation des molécules organiques extraites.

La température à l'intérieur de l'enceinte est régulée à l'aide de moyens de contrôle et de commande de la température qui permettent de mesurer la température à l'intérieur de l'enceinte avec une précision de +/-1°C et d'ajuster la température.

### E6. Volatilisation des molécules organiques fonctionnalisées :

La température de la chambre de préparation est ensuite élevée à la température Tᵥ de 200°C +/- 5°C en une durée de 15 secondes +/- 10 secondes au moyen du thermocoax (4a). La température à l'intérieur de l'enceinte est régulée à l'aide de moyens de contrôle et de commande.

Puis, la température Tᵥ est maintenue pendant une durée de 10 minutes afin de réaliser la volatilisation des molécules organiques.

| Température | Tᵥ = 200°C +/- 5°C |
|---|---|
| Durée de la montée en température | Rapide, de l'ordre de 15 s (pas nécessairement, cela peut être plus lent) |
| Régulation de la température | Automatique à l'aide des moyens de commande et de contrôle de la température |

### E7. Contrôler / Régler les débits dans l'ensemble du dispositif avant le transfert des molécules volatilisées vers la chambre de focalisation :

Les débits et pression sont mesurés en sortie de la chambre de focalisation. Le débit à l'entrée (13a) de la chambre de préparation est réglé en fonction du débit en sortie de la chambre de focalisation et de la valeur souhaitée par l'opérateur. Les débits de split de la chambre de préparation et de la chambre de focalisation sont également contrôlés.

| | |
|---|---|
| Plage de débit souhaité en sortie de la chambre de focalisation | 1 ml/min |
| Précision de la mesure | 1/10 ml/min avec une pression de 4 bars max. |
| Asservissement | - régulation électronique et commande distance |
| Fréquence de mesure | en continue |
| Réglage du débit | Electronique |
| Précision du réglage | 1/10 ml |
| Fréquence d'asservissement du réglage du débit sur la mesure | Toutes des secondes |

**Débits de la vanne de split :**

| | |
|---|---|
| Débit réglable | Entre 1 ml/min |
| Asservissement au débit d'entrée débit | Déterminer manuellement au 1/10 ml par min - régulation électronique et commande distance 1 mL/min |
| Positionnement des vannes | Proche de la sortie de la chambre de préparation et de la chambre de focalisation afin d'éviter les volumes morts |

### E8. Alimenter la colonne du CPG-SM en gaz :

Cette fonction consiste à contrôler la vitesse linéaire du gaz vecteur dans la colonne chromatographique.

| | |
|---|---|
| Gaz utilisé | He alpha 2 |
| Débit | 1 mL/min |
| Température | Dépendant de la température de la colonne |
| Entrée | 1 Entrée directe dans la chambre de focalisation (3b), sans passer par la chambre de préparation (3a), 1 entrée par la chambre (3a) transitant par la chambre (3b) |

### E9. Transfert des molécules fonctionnalisées par balayage vers la chambre de focalisation :

Cette fonction est réalisée par le compartiment de préparation et consiste à maintenir la température de volatilisation Tᵥ et à réaliser le balayage par le gaz de balayage. Un balayage de la chambre de préparation par un gaz inerte est effectué au moyen de l'entrée (13a) et de la sortie (14a) permettant la circulation du gaz afin de transférer les molécules organiques volatilisées vers la chambre de focalisation (3b).

| | |
|---|---|
| Température d'évaporation | 200°C +/- 5°C |
| Durée du « plateau » du transfert (balayage) | 15 min |
| Régulation de la température | A l'aide des moyens de commande et de contrôle de la température |
| Caractéristique du flux de gaz utilisé pour le balayage (gaz pousseur) : | |
| - nature | Hélium alpha 2 ou autre gaz inerte |
| - balayage : | Balayage continu |
| - pression | max 4 bar |
| - débit | 0,3 - 15 mL/min |
| - entrée | Via l'EP |
| - interface physique | AD |
| Caractéristique du flux à l'intérieur | Balayage continu |
| Caractéristique de l'écoulement | |
| - type de flux | Laminaire |
| - débit | 0.3 - 15 ml/min |
| - pression | 4 bars max |
| - volume | AD |
| - forme | AD |
| Eléments transférés vers la chambre de focalisation | Toutes les molécules volatilisées par le chauffage, fonctionnalisées ou non qui sont présentes dans la chambre de préparation |

### E10. Piéger au sein de la chambre de focalisation les composés volatils à froid :

Cette fonction consiste à refroidir un point particulier situé à l'intérieur de la chambre de focalisation. Les molécules organiques se condensent alors sur ce point.

| | |
|---|---|
| Géométrie du point froid | De l'ordre de 1 à 2 cm maximum |
| | Diamètre de 0,5 à 5 mm |
| Position du point froid | Avant la colonne de chromatographie, et après la chambre de préparation |
| Durée pour réaliser cette fonction | De l'ordre de 1 à 3 min |
| Température idéale pour réaliser cette fonction | - De -40 à -80 °C avec CO₂ |
| | - 160 °C avec N₂ |

**Evacuer les gaz à l'extérieur et contrôler leurs débits :**

| | |
|---|---|
| Utilité | Pour les fonctions de préparation et de focalisation |
| Débit réglable | |
| Asservissement au débit d'entrée : | Déterminer manuellement au 1/10 ml par min - régulation électronique et commande distance |
| Positionnement des vannes | A proximité des chambres de préparation et de focalisation (pour éviter les volumes morts) |

### E11. Evaporer au vide tout ce qui est inutile :

Cette fonction consiste à évacuer les restes de MTBSTFA et/ou de solvant à faible température (température inférieure à 0°C). Le vide est appliqué dans les chambres de préparation et/ou de focalisation à l'aide de moyen permettant de faire le vide (pompe).

| | |
|---|---|
| Utilité | Pour les fonctions de préparation et de focalisation |
| Efficacité du pompage | |
| Interface avec la pompe externe | Remontée d'huile dans les enceintes : non envisageable |

### E12. Chauffer les composés volatiles piégés et balayer vers le CPG-SM :

Au cours de cette fonction, la température de volatilisation est maintenue dans la chambre de focalisation et un balayage est réalisé par un gaz inerte au moyen de l'entrée (13b) et de la sortie (12) et (14a) afin de transférer les molécules organiques volatilisées vers l'instrument d'analyse CPG-SM (18) et (19).

| | |
|---|---|
| Température d'évaporation | 200°C +/- 5°C |
| Durée allouée à la montée en température | 15-30s |
| Durée du « plateau » du transfert (balayage) | De 1 à 5 min |
| Présence d'un dispositif de mesure de la température à l'intérieur de l'enceinte | Oui, précision : +/- 1°C Nécessaire pour réaliser la régulation |
| Régulation de la température | Oui, réalisée par un dispositif externe (mesure de la T interne) |
| Gaz utilisé pour le balayage (gaz pousseur) | Hélium alpha 2 ou autre gaz inerte |
| Caractéristique du flux en entrée | |
| - balayage : | Balayage continu |
| - pression | max 4 bar |
| - débit | 0,3 mL/min à 15 mL/min |
| Caractéristique du flux à l'intérieur | Balayage continu |
| Caractéristique de l'écoulement | |
| - type de flux | Laminaire |
| - débit | 1 - 10 ml/mn |
| - pression | AD |
| - volume | AD |
| - forme | AD |
| Interface physique pour l'entrée de gaz | Bouteille / Réacteur |
| Eléments transférés au dispositif d'analyse | Toutes les molécules vaporisées par le chauffage, dérivatisées ou non présentes dans l'enceinte |

On peut noter que toutes les molécules volatilisées présentes dans la chambre de préparation, qu'elles soient fonctionnalisées ou non, peuvent être transférées vers la chambre de focalisation puis vers l'instrument d'analyse. Par exemple, le solvant ou l'agent de fonctionnalisation restants utilisé au cours de l'étape de fonctionnalisation peut être volatilisé en même temps que les molécules organiques fonctionnalisées et transférée.

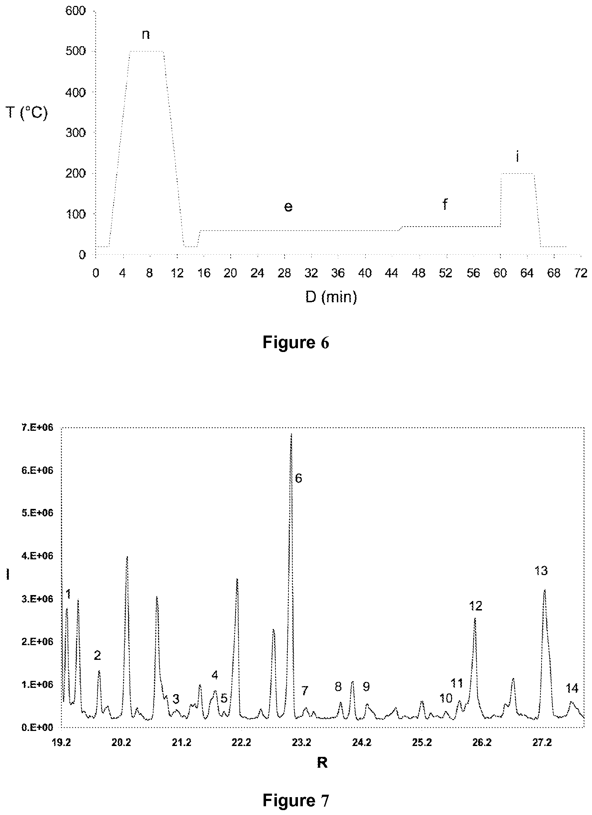

L'ensemble des étapes de cet exemple peut être illustré par la figure 6 qui représente le chronogramme synthétisant les différents cycles de température T (en °C) en fonction de la durée D (en minute) de l'expérience pour l'expérimentation « un lieu / deux étapes » (ou « one pot / two steps »). Les étapes (n), (e), (f) et (i) représentent respectivement les étapes de nettoyage de la chambre de préparation, d'extraction des molécules organiques, de fonctionnalisation des molécules organiques extraites, et d'injection des molécules organiques volatilisées dans l'instrument d'analyse.

### Résultats :

La figure 7 représente le chromatogramme issu de l'analyse chromatographique couplé à la spectrométrie de masse de l'échantillon de 0,5 g de sol du désert d'Atacama après le procédé « un lieu / deux étapes » (ou « one pot / two steps »), c'est-à-dire après extraction aux ultrasons (30 minutes) par un mélange de 0,5 mL d'isopropanol et de 0,5 mL d'eau, évaporation du solvant sous flux d'hélium, traitement par le mélange MTBSTFA / DMF (75°C, 15 minutes) et volatilisation.

Le chromatogramme de la figure 7 représente l'évolution de l'intensité I du signal du détecteur, qui est lié à la concentration instantanée de la molécule organique éluée, en fonction du temps de rétention R (en minute). Sur cette représentation graphique, des pics numérotés émergent et correspondent aux molécules organiques, fonctionnalisée par le MTBSTFA, suivantes : 1 : acide benzoïque, 2 : acide 2-hydroxy propanoïque, 3: alanine, 4 : acide 2-hydroxy butanoïque, 5 : glycine, 6 : acide nonanoïque, 7: sarcosine, 8 : acide 3-méthyle benzoïque, 9: acide 2-butanoïque, 10 : acide hexanoïque, 11 : valine, 12 : urée, 13 : acide decanoïque, 14 : norleucine.

En conclusion, le tableau suivant présente tous les composés organiques détectés (D) ou non (ND) dans l'échantillon de 0,5 g de sol d'Atacama (Chili) en utilisant la technique « one pot - two steps ».

**Tableau 2**

| **Composés organiques contenu dans le sol du désert d'Atacama (Chili)** | **Procédure « one pot - two steps »** |
|---|---|
| Acide benzoïque | D |
| Acide acétique | D |
| Alanine | D |
| Glycine | D |
| Acide sulphurique | D |
| Acide nonanoïque | D |
| Valine | D |
| Leucine | D |
| Proline | D |
| Acide 1,2-benzendicarboxylique | D |
| Acide Phosphorique | D |
| Benzendicarboxylate bis(2-methylpropyl) | D |
| Serine | D |
| Phenylalanine | D |
| Acide dodécanoïque | ND |
| Acide tétradécanoïque | D |
| Acide pentadécanoïque | ND |
| Acide glutamique | D |
| Acide octadecanoïque | D |
| Benzendicarboxylate bis(2-methylpropyl) | D |

Les résultats qualitatifs obtenus à partir de la procédure "one pot - two steps" ont permis de retrouver la majorité des composés contenus dans le sol d'Atacama.

### Exemple 5 : Exemple d'application du DPIE : réalisation du procédé « un lieu - une étape » (ou « one pot - one step »)

Dans cet exemple, un procédé d'extraction, de fonctionnalisation, de volatilisation et d'injection de molécules organiques contenues dans un échantillon solide est réalisé à l'aide du DPIE de l'exemple 1.

L'analyse d'un échantillon de sol du désert d'Atacama au Chili (analogue de sol martien) est effectuée suivant le protocole « one pot - one step » décrit ci-dessous.

L'utilisation d'un sol parfaitement caractérisé (sol Atacama) sert ici de référence pour comparer les performances du DPIE avec celles des techniques d'extraction classique de laboratoire. L'objectif est de démontrer la faisabilité de l'extraction et de la fonctionnalisation des molécules organiques contenues à l'état de traces dans un échantillon de sol. Le bon fonctionnement du DPIE sera évalué par l'analyse CPG-SM en aval.

### Protocole :

Les étapes E1 à E6 suivantes sont réalisées successivement.

### E1. Nettoyage et conditionnement du DPIE :

Un état de propreté en deçà de la limite de sensibilité du CPG-SM a été établi à l'intérieur de la chambre de préparation et/ou de la chambre de focalisation du DPIE afin de s'assurer que le seuil de résidus présents dans le DPIE ne perturbera pas la détection chimique réalisée par le CPG-SM.

La limite de propreté est estimée à 10⁻¹⁵ mole pour un volume de la chambre de préparation de 0,5 mL.

Notons que cette fonction n'est pas utile si la chambre de préparation et la chambre de focalisation sont dans un état de propreté satisfaisant avant introduction de l'échantillon (comme c'est le cas d'une enceinte utilisable une seule fois par exemple).

Le conditionnement est réalisé simultanément par chauffage et balayage par un gaz inerte de l'intérieur du DPIE comme suit :
- la température de la chambre de préparation est élevée de 20°C (température du laboratoire) à 500°C en 15 secondes au moyen du thermocoax (4a).
- la température de la chambre de préparation est maintenue à 500°C et un balayage par de l'hélium est effectué pendant 10 minutes afin d'effectuer une pyrolyse et d'éliminer les résidus de pyrolyse par entraînement au moyen du gaz inerte. Les caractéristiques du balayage sont données dans le tableau suivant :

| **Critères** | **Caractéristiques** |
|---|---|
| Gaz inerte | Hélium |
| Caractéristiques de propreté du gaz | Alpha 2 |
| Débit gaz | 10 ml/min |
| Stabilité du débit | ± 10 % (afin d'éliminer les résidus de pyrolyse) |
| Température du gaz à l'entrée | 500°C (afin d'éviter la chute de la température de pyrolyse) |
| Caractéristiques de l'entrée de gaz | 10 mL/min |
| Caractéristiques de la sortie de gaz | 10 mL/min |
| Espace balayé | Intérieur de la chambre de préparation |
| Durée du balayage | 10 min |
| Caractéristiques physiques du dispositif d'introduction du gaz | Raccord standard étanche |
| Caractéristiques physiques du dispositif de rejet du gaz | Raccord standard étanche sans filtrage |

Afin de vérifier la propreté de l'appareil après la pyrolyse et la non-présence de résidus ou de molécules organiques dans la chambre de préparation, un test à vide peut être effectué. Ce test consiste à exécuter les étapes E3 à E6 décrites ci-après mais sans échantillon.

Les conditions de propreté requises au cours des différentes opérations suivantes sont données par la limite de détection du CPG-MS qui est de 10⁻¹⁵ mole.

Par ailleurs, les conditions de propreté requises pour l'analyse d'échantillons nécessitent d'avoir un dispositif d'introduction d'échantillon respectant ce critère de propreté de 10⁻¹⁵ mole. Dans cet exemple, l'étape suivante d'introduction d'échantillon a été réalisée manuellement sous une hotte à flux laminaire.

### E2. Introduction de l'échantillon :

L'échantillon à analyser est introduit manuellement, à l'aide d'une spatule métallique, dans la chambre de préparation. Les caractéristiques de l'échantillon sont les suivantes:

| **Critères** | **Caractéristiques** |
|---|---|
| Composition chimique de l'échantillon | sable contenant des molécules organiques à l'état de trace |
| Granulométrie de l'échantillon | 100 à 250µm |
| Masse de l'échantillon | 0,5 g |
| Volume de l'échantillon | environ 0,3 mL |
| Propriétés et forme de l'échantillon | Solide et sec |
| Caractéristiques du lieu de dépôt de l'échantillon au sein du dispositif | - Dépôt uniforme pour assurer une bonne mouillabilité |
| | - Reproductibilité du dépôt |
| Condition de propreté requise au cours de cette opération | - Limite de détection du CPG-MS : 10⁻¹⁵ mole |
| | - Recours à un dispositif d'introduction respectant ce critère |
| Température de la chambre de préparation en début d'introduction | Ambiante (25 °C) |

Une fois l'échantillon introduit, la chambre de préparation est refermée au moyen du bouchon (30). La température et la pression de l'échantillon sont contrôlées et sont respectivement de 25°C et de 1 bar.

### E3. Extraction par thermo-désorption :

### Mise sous pression de l'échantillon

Après l'introduction de l'échantillon à l'intérieur de la chambre de préparation, une pression de 4 mbar +/- 3 mbar est appliquée.

### Elévation de la température de l'échantillon

La température de la chambre de préparation est ensuite élevée à la température T_{d} de 500°C +/- 5°C en 15 secondes au moyen du thermocoax (4a).

### Maintien de la température

La température de la chambre de préparation est ensuite maintenue à la température T_{d} de 500°C +/- 5°C pendant 5 minutes afin de désorber par thermo-désorption les molécules organiques contenues dans l'échantillon solide.

On peut noter que la température à l'intérieur de l'enceinte est régulée à l'aide de moyens de contrôle et de commande de température.

### E4. Conditionnement de la chambre de préparation du DPIE pour la fonctionnalisation des molécules organiques extraites :

### Diminution de la température

Un refroidissement est effectué afin d'obtenir une descente rapide de la température. Dans le cadre de cet exemple, la température est diminuée en 15 secondes de la température T_{d} à la température T_{f} de 75°C +/- 1°C à l'aide du moyen de refroidissement décrit dans l'exemple 1.

### Maintien de la température

L'étape de diminution de la température est suivie d'une étape de stabilisation de la température afin de laisser l'échantillon atteindre la température T_{f} pour la réaction de fonctionnalisation. Ici, la température T_{f} est maintenue pendant une durée de 5 minutes.

La température à l'intérieur de la chambre de préparation est régulée à l'aide de moyens de contrôle et de commande de température.

### E5. Fonctionnalisation des molécules organiques extraites :

Une solution comprenant un agent de fonctionnalisation à température ambiante (20°C) est introduite dans la chambre de préparation au moyen d'une seringue par le moyen d'introduction (9).

La solution utilisée ici est obtenue en mélangeant 30 µL de MTBSTFA commercialisé sous la référence 19915 par la société Sigma-Aldrich (France) et 10 µL de DMF commercialisé sous la référence 227056 par la société Sigma-Aldrich (France).

Les caractéristiques et quantités de solution d'agent de fonctionnalisation introduites sont les suivantes :

| Solution d'agent de fonctionnalisation | Une solution de MTBSTFA pur (30 µL) dans le DMF pur (10 µL) |
|---|---|
| Volume total de solution introduit | 40 µL |

La température de la chambre de préparation est ensuite maintenue à la température T_{f} de 75°C +/- 5°C.

Puis, la température T_{f} est maintenue pendant une durée de 30 minutes +/- 1 minute afin de réaliser la réaction de fonctionnalisation des molécules organiques extraites.

On peut noter que la température à l'intérieur de l'enceinte est régulée à l'aide de moyens de contrôle et de commande de température qui permettent de mesurer la température à l'intérieur de l'enceinte avec une précision de +/-1°C et d'ajuster la température.

### E6. Volatilisation des molécules organiques fonctionnalisées :

La température de la chambre de préparation est ensuite élevée à la température Tᵥ de 200°C +/- 5°C en une durée de 15 secondes +/- 10 secondes au moyen du thermocoax (4a). La température à l'intérieur de l'enceinte est régulée à l'aide de moyens de contrôle et de commande de température.

Puis, la température Tᵥ est maintenue pendant une durée de 10 minutes afin de réaliser la volatilisation des molécules organiques.

### E7. Contrôler / Régler les débits dans l'ensemble du dispositif avant le transfert des molécules volatilisées vers la chambre de focalisation :

Les débits et pression sont mesurés en sortie de la chambre de focalisation. Le débit à l'entrée (13a) de la chambre de préparation est réglé en fonction du débit en sortie de la chambre de focalisation et de la valeur souhaitée par l'opérateur. Les débits de split de la chambre de préparation et de la chambre de focalisation sont également contrôlés.

| Plage de débit souhaité en sortie de la chambre de focalisation | 1 ml/min |
|---|---|
| Précision de la mesure | 1/10 ml/min avec une pression de 4 bars max. |
| Asservissement | - régulation électronique et commande distance |
| Fréquence de mesure | en continue |
| Réglage du débit | Electronique |
| Précision du réglage | 1/10 ml |
| Fréquence d'asservissement du réglage du débit sur la mesure | Toutes des secondes |

**Vanne de split :**

| Débit réglable | Entre 1 ml/min |
|---|---|
| Asservissement au débit d'entrée débit | Déterminer manuellement au 1/10 ml par min - régulation électronique et commande distance 1 mL/min |
| Positionnement des vannes | Proche de la sortie de la chambre de préparation et de la chambre de focalisation afin d'éviter les volumes morts |

### E8. Alimenter la colonne du CPG-SM en gaz :

Cette fonction consiste à contrôler la vitesse linéaire du gaz vecteur dans la colonne chromatographique.

| Gaz utilisé | He alpha 2 |
|---|---|
| Débit | 1 mL/min |
| Température | Dépendant de la température de la colonne |
| Entrée | 1 Entrée directe dans la chambre de focalisation (3b), sans passer par la chambre de préparation (3a), |
| | 1 entrée par la chambre (3a) transitant par la chambre (3b) |

### E9. Transfert des molécules fonctionnalisées par balayage vers la chambre de focalisation :

Cette fonction est réalisée par le compartiment de préparation et consiste à maintenir la température de volatilisation Tᵥ et à réaliser le balayage par le gaz de balayage. Un balayage de la chambre de préparation par un gaz inerte est effectué au moyen de l'entrée (13a) et de la sortie (14a) permettant la circulation du gaz afin de transférer les molécules organiques volatilisées vers la chambre de focalisation (3b).

| | |
|---|---|
| Température d'évaporation | 200°C +/- 5°C |
| Durée du « plateau » du transfert (balayage) | 15 min |
| Régulation de la température | A l'aide des moyens de commande et de contrôle de la température |
| Caractéristique du flux de gaz utilisé pour le balayage (gaz pousseur) : | |
| - nature | Hélium alpha 2 ou autre gaz inerte |
| - balayage : | Balayage continu |
| - pression | max 4 bar |
| - débit | 0,3 - 15 mL/min |
| - entrée | Via l'EP |
| - interface physique | AD |
| Caractéristique du flux à l'intérieur | Balayage continu |
| Caractéristique de l'écoulement | |
| - type de flux | Laminaire |
| - débit | 0.3 - 15 ml/min |
| - pression | 4 bars max |
| - volume | AD |
| - forme | AD |
| Eléments transférés vers la chambre de focalisation | Toutes les molécules volatilisées par le chauffage, fonctionnalisées ou non qui sont présentes dans la chambre de préparation |

### E10. Piéger au sein de la chambre de focalisation les composés volatils à froid :

Cette fonction consiste à refroidir un point particulier situé à l'intérieur de la chambre de focalisation. Les molécules organiques se condensent alors sur ce point.

| | |
|---|---|
| Géométrie du point froid | De l'ordre de 1 à 2 cm maximum |
| | Diamètre de 0,5 à 5 mm |
| Position du point froid | Avant la colonne de chromatographie, et après la chambre de préparation |
| Durée pour réaliser cette fonction | De l'ordre de 1 à 3 min |
| Température idéale pour réaliser cette fonction | De -40 à -80 °C avec CO₂ |
| | -160 °C avec N₂ |

### E11. Evacuer les gaz à l'extérieur et contrôler leurs débits :

| Utilité | Pour les fonctions de préparation et de focalisation |
|---|---|
| Débit réglable | |
| Asservissement au débit d'entrée : | Déterminer manuellement au 1/10 ml par min - régulation électronique et commande distance |
| Positionnement des vannes | A proximité des chambres de préparation et de focalisation (pour éviter les volumes morts) |

### E12. Evaporer au vide tout ce qui est inutile

Cette fonction consiste à évacuer les restes de MTBSTFA et/ou de solvant à faible température (température inférieure à 0°C). Le vide est appliqué dans les chambres de préparation et/ou de focalisation à l'aide de moyen permettant de faire le vide (pompe).

| Utilité | Pour les fonctions de préparation et de focalisation |
|---|---|
| Efficacité du pompage | |
| Interface avec la pompe externe | Remontée d'huile dans les enceintes : non envisageable |

### E13. Chauffer les composés volatiles piégés et balayer vers le CPG-SM :

Au cours de cette fonction, la température de volatilisation est maintenue dans la chambre de focalisation et un balayage est réalisé par un gaz inerte au moyen de l'entrée (13b) et de la sortie (12) et (14a) afin de transférer les molécules organiques volatilisées vers l'instrument d'analyse CPG-SM (18) et (19).

| | |
|---|---|
| Température d'évaporation | 200°C +/- 5°C |
| Durée allouée à la montée en température | 15 -30s |
| Durée du « plateau » du transfert (balayage) | De 1 à 5 min |
| Présence d'un dispositif de mesure de la température à l'intérieur de l'enceinte | Oui, précision: +/- 1°C Nécessaire pour réaliser la régulation |
| Régulation de la température | Oui, réalisée par un dispositif externe (mesure de la T interne) |
| Gaz utilisé pour le balayage (gaz pousseur) | Hélium alpha 2 ou autre gaz inerte |
| Caractéristique du flux en entrée | |
| - balayage : | Balayage continu |
| - pression | max 4 bar |
| - débit | 0,3 mL/min à 15 mL/min |
| Caractéristique du flux à l'intérieur | Balayage continu |
| Caractéristique de l'écoulement | |
| - type de flux | Laminaire |
| - débit | 1 - 10 ml/mn |
| - pression | AD |
| - volume | AD |
| - forme | AD |
| Interface physique pour l'entrée de gaz | Bouteille / Réacteur |
| Eléments transférés au dispositif d'analyse | Toutes les molécules vaporisées par le chauffage, dérivatisées ou non présentes dans l'enceinte |

On peut noter que toutes les molécules volatilisées présentes dans la chambre de préparation, qu'elles soient fonctionnalisées ou non, peuvent être transférées vers la chambre de focalisation puis vers l'instrument d'analyse. Par exemple, les restes de solvant et/ou d'agent de fonctionnalisation utilisés au cours de l'étape de fonctionnalisation peuvent être volatilisés en même temps que les molécules organiques fonctionnalisées et transférée.

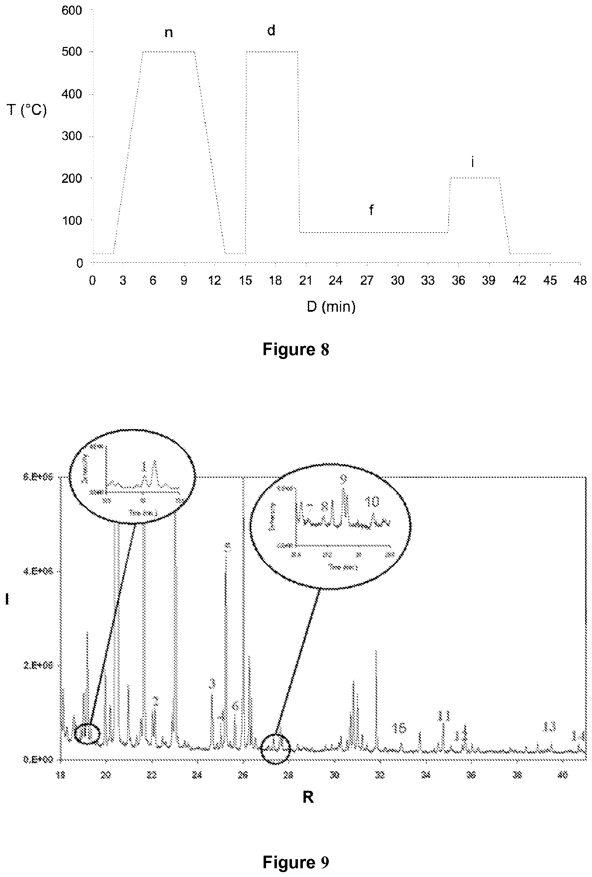

L'ensemble des étapes de cet exemple peut être illustré par la figure 8 qui représente le chronogramme synthétisant les différents cycles de température en fonction du temps de l'expérience pour l'expérimentation « un lieu / une étape » (ou « one pot / one step »). Les étapes (n), (d), (f) et (i) représentent respectivement les étapes de nettoyage de la chambre de préparation, de thermodésorption des molécules organiques, de fonctionnalisation des molécules organiques désorbées, et d'injection des molécules organiques volatilisées dans l'instrument d'analyse.

### Résultats :

La figure 9 représente le chromatogramme issu de l'analyse chromatographique couplé à la spectrométrie de masse de l'échantillon de 0,5 g de sol du désert d'Atacama après le procédé « un lieu / une étape » (ou « one pot / one step »), c'est-à-dire après chauffage à 500°C durant 5 minutes, traitement par un mélange MTBSTFA / DMF (75°C, 15 minutes) et volatilisation.

Le chromatogramme de la figure 9 représente l'évolution de l'intensité I du signal du détecteur, qui est lié à la concentration instantanée de la molécule organique éluée, en fonction du temps de rétention R (en minute). Sur cette représentation graphique, des pics numérotés émergent et correspondent aux molécules organiques, fonctionnalisée par le MTBSTFA, suivantes : 1 : acide acétique , 2 : acide propanoïque, 3: acide benzoïque, 4 : acide heptanoïque, 5: acide octanoïque, 6 : acide 4-methyl pentanoïque, 7 : alanine, 8 : glycine, 9: acide nonanoïque, 10: valine, 11: acide dodecanoïque, 12: acide phosphorique, 13: acide 1,2 benzendicarboxylique, 14: acide pentandecanoïque, 15 : 1,2 benzendicarboxylate bis(2-méthylpropyl).

En conclusion, le tableau suivant présente tous les composés organiques détectés (D) ou non (ND) dans l'échantillon de 0,5 g de sol d'Atacama (Chili) en utilisant la technique « one pot - one step ».

**Tableau 3**

| **Composés organiques contenu dans le sol du désert d'Atacama (Chili)** | **Procédure "one pot - one step"** |
|---|---|
| Acide benzoïque | D |
| Acide acétique | D |
| Alanine | D |
| Glycine | D |
| Acide sulphurique | ND |
| Acide nonanoïque | D |
| Valine | D |
| Leucine | ND |
| Proline | ND |
| Acide 1,2-benzendicarboxylique | D |
| Acide Phosphorique | D |
| Benzendicarboxylate bis(2-methylpropyl) | D |
| Serine | ND |
| Phenylalanine | ND |
| Acide dodécanoïque | D |
| Acide tétradécanoïque | ND |
| Acide pentadécanoïque | D |
| Acide glutamique | ND |
| Acide octadécanoïque | D |
| Benzendicarboxylate bis(2-methylpropyl) | D |

Les résultats qualitatifs obtenues à partir de la procédure "one pot - one step" ont permis de retrouver la majorité des acides carboxyliques contenus dans le sol d'Atacama. Une partie des acides aminés (les plus légers) ont pu être détectés. Cette technique a l'avantage de ne nécessiter aucun solvant et d'être réalisable en une seule étape. Ces résultats montrent que le dispositif de préparation et d'injection d'échantillon de l'invention permet d'extraire et de mettre en évidence plus de 65 % des molécules présentes dans l'échantillon. En outre, le procédé et le dispositif décrits dans la présente sont parfaitement adaptés à l'analyse *in situ.*

### Liste des références

**(1)** Mowry Curtis et al., Rapid détection of bacteria with miniaturized pyrolysis-gas chromatographic analysis, Proceeding of SPIE, 2001, Vol. 4575, pp. 83-90.
**(2)** Brevet US N° 6,511,760.
**(3)** R. Sternberg, A. Buch, C. Szopa, C. Vidal-Madjar, F. Raulin, Gas chromatography in space exploration, Encyclopaedia of Separation Science, Academic Press, London, (Edition: I.D. Wilson, E.R. Adlard, M. Cooke, C.F. Poole) (2006).

## Revendications

1. Dispositif de préparation et d'injection d'un échantillon (1) comprenant :
(a) un compartiment de préparation d'échantillon (2a) comprenant :
(i) une chambre de préparation (3a) étanche présentant :
- un moyen d'introduction de l'échantillon (9),
- au moins une entrée (13a) et au moins une sortie (10) étanches permettant la circulation d'un gaz de balayage au travers de ladite chambre de préparation (3a) ;
(ii) un moyen de chauffage (4a) de ladite chambre de préparation (3a) ;
(iii) un moyen de refroidissement (5a) de ladite chambre de préparation (3a) ;
(iv) un moyen étanche d'introduction d'une substance liquide dans la chambre de préparation (3a) connecté à au moins un réservoir destiné à contenir une substance liquide ; et
(b) un compartiment d'injection (2b) comprenant :
(i) une chambre de focalisation (3b) étanche présentant au moins une entrée (11) étanche connectée à la sortie (10) de la chambre de préparation (3a) et au moins une sortie (12) étanche permettant la circulation dudit gaz de balayage au travers de ladite chambre (3b) ;
(ii) un moyen de chauffage (4b) de ladite chambre de focalisation (3b) ;
(iii) un moyen de refroidissement (5b) de ladite chambre de focalisation (3b) ;
(c) une vanne (6) située entre la sortie (10) de la chambre de préparation (3a) et l'entrée (11) de la chambre de focalisation (3b) ;
(d) des moyens de commande (7) et de contrôle (8) de la température de la chambre de préparation (3a) et de la chambre de focalisation (3b) ; et
(e) des moyens de commande (15) et de contrôle (16) de la pression dans la chambre de préparation (3a) et dans la chambre de focalisation (3b).

2. Dispositif (1) selon la revendication 1, dans lequel les 2 compartiments (2a) et (2b) sont dissociables.

3. Dispositif (1) selon la revendication 1 ou 2, dans lequel le moyen de chauffage (4a) et/ou (4b) est capable d'appliquer une température de 600°C.

4. Dispositif (1) selon l'une quelconque des revendications 1 à 3, dans lequel le moyen de chauffage (4a) et/ou (4b) est capable d'appliquer une vitesse moyenne de chauffage de 10 à 60 °C/seconde.

5. Dispositif (1) selon l'une quelconque des revendications 1 à 4, dans lequel le moyen de refroidissement (5a) et/ou (5b) est capable d'appliquer une vitesse moyenne de refroidissement de 10 à 60 °C/seconde.

6. Dispositif (1) selon l'une quelconque des revendications 1 à 5, dans lequel la chambre de préparation (3a) présente en outre une seconde sortie (14a) étanche du gaz de balayage.

7. Dispositif (1) selon l'une quelconque des revendications 1 à 6, dans lequel la chambre de focalisation (3b) présente en outre une seconde entrée (13b) étanche du gaz de balayage et/ou une seconde sortie (14b) étanche du gaz de balayage.

8. Dispositif (1) selon l'une quelconque des revendications 1 à 7, dans lequel le volume de l'enceinte de la chambre (3a) et/ou le volume de l'enceinte de la chambre (3b) est de 0,5 à 2 mL.

9. Dispositif (1) selon l'une quelconque des revendications 1 à 8, comprenant en outre un moyen (17) permettant de faire le vide ou d'appliquer une pression dans la chambre de préparation (3a) et/ou dans la chambre de focalisation (3b).

10. Système d'analyse comprenant un dispositif (1) selon l'une quelconque des revendications 1 à 9, et au moins un instrument d'analyse (18) connecté en aval dudit dispositif de préparation et d'injection d'échantillon (1).

11. Système d'analyse selon la revendication 10, dans lequel l'instrument d'analyse est un chromatographe en phase gazeuse (18).

12. Système d'analyse selon la revendication 10 ou 11, dans lequel l'instrument d'analyse (18) est un chromatographe en phase gazeuse couplé à un spectromètre de masse (19) ou à un autre détecteur.

13. Système d'analyse selon l'une quelconque des revendications 10 à 12, comprenant en outre un circuit de balayage comprenant :
- un réservoir (20) de gaz de balayage ;
- une canalisation (21) connectant ledit réservoir (20) de gaz de balayage à l'entrée étanche (13a) de la chambre de préparation (3a) ; et
- une canalisation (22) connectant la sortie (12) de la chambre de focalisation (3b) à l'instrument d'analyse (18).

## Patentansprüche

1. Vorrichtung zur Präparation und Einspritzung einer Probe (1), umfassend:
(a) ein Abteil zur Präparation der Probe (2a), umfassend:
(i) eine dichte Präparationskammer (3a), umfassend:
- ein Mittel zur Einführung der Probe (9),
- mindestens einen dichten Eingang (13a) und mindestens einen dichten Ausgang (10), die die Zirkulation eines Spülgases durch die Präparationskammer (3a) ermöglichen;
(ii) ein Heizmittel (4a) für die Präparationskammer (3a);
(iii) ein Kühlmittel (5a) für die Präparationskammer (3a);
(iv) ein dichtes Mittel zur Einführung einer flüssigen Substanz in die Präparationskammer (3a), das an mindestens einen Behälter angeschlossen ist, der dazu bestimmt ist, eine flüssige Substanz zu enthalten; und
(b) ein Abteil zur Einspritzung (2b), umfassend:
(i) eine dichte Fokussierungskammer (3b), die mindestens einen dichten Eingang (11), der an den Ausgang (10) der Präparationskammer (3a) angeschlossen ist, und mindestens einen dichten Ausgang (12) aufweist, der die Zirkulation des Spülgases durch die Kammer (3b) ermöglicht;
(ii) ein Heizmittel (4b) für die Fokussierungskammer (3b);
(iii) ein Kühlmittel (5b) für die Fokussierungskammer (3b);
(c) ein Ventil (6), das sich zwischen dem Ausgang (10) der Präparationskammer (3a) und dem Eingang (11) der Fokussierungskammer (3b) befindet;
(d) Mittel zur Steuerung (7) und Kontrolle (8) der Temperatur der Präparationskammer (3a) und der Fokussierungskammer (3b); und
(e) Mittel zur Steuerung (15) und Kontrolle (16) des Drucks in der Präparationskammer (3a) und in der Fokussierungskammer (3b).

2. Vorrichtung (1) nach Anspruch 1, bei der die 2 Abteile (2a) und (2b) trennbar sind.

3. Vorrichtung (1) nach Anspruch 1 oder 2, bei der das Heizmittel (4a) und/oder (4b) geeignet ist, eine Temperatur von 600 °C anzulegen.

4. Vorrichtung (1) nach einem der Ansprüche 1 bis 3, bei der das Heizmittel (4a) und/oder (4b) geeignet ist, eine durchschnittliche Heizgeschwindigkeit von 10 bis 60 °C/Sekunde anzulegen.

5. Vorrichtung (1) nach einem der Ansprüche 1 bis 4, bei der das Kühlmittel (5a) und/oder (5b) geeignet ist, eine durchschnittliche Kühlgeschwindigkeit von 10 bis 60 °C/Sekunde anzulegen.

6. Vorrichtung (1) nach einem der Ansprüche 1 bis 5, bei der die Präparationskammer (3a) ferner einen zweiten dichten Ausgang (14a) für das Spülgas aufweist.

7. Vorrichtung (1) nach einem der Ansprüche 1 bis 6, bei der die Fokussierungskammer (3b) ferner einen zweiten dichten Eingang (13b) für das Spülgas und/oder einen zweiten dichten Ausgang (14b) für das Spülgas aufweist.

8. Vorrichtung (1) nach einem der Ansprüche 1 bis 7, bei der das Volumen des Raums der Kammer (3a) und/oder das Volumen des Raums der Kammer (3b) 0,5 bis 2 mL beträgt.

9. Vorrichtung (1) nach einem der Ansprüche 1 bis 8, ferner umfassend ein Mittel (17), das es ermöglicht, ein Vakuum herzustellen, oder einen Druck in der Präparationskammer (3a) und/oder in der Fokussierungskammer (3b) anzulegen.

10. Analysesystem, umfassend eine Vorrichtung (1) nach einem der Ansprüche 1 bis 9 und mindestens ein Analyseinstrument (18), das stromabwärts zu der Vorrichtung zur Präparation und Aufgabe einer Probe (1) angeschlossen ist.

11. Analysesystem nach Anspruch 10, bei dem das Analyseinstrument ein Chromatograph in Gasphase (18) ist.

12. Analysesystem nach Anspruch 10 oder 11, bei dem das Analyseinstrument (18) ein Chromatograph in Gasphase ist, der an ein Massespektrometer (19) oder einen anderen Detektor angeschlossen ist.

13. Analysesystem nach einem der Ansprüche 10 bis 12, ferner umfassend eine Spülschaltung, umfassend:
- einen Spülgasbehälter (20);
- eine Kanalisation (21), die den Spülgasbehälter (20) an den dichten Eingang (13a) der Präparationskammer (3a) anschließt; und
- eine Kanalisation (22), die den Ausgang (12) der Fokussierungskammer (3b) an das Analyseinstrument (18) anschließt.

## Claims

1. Device (1) for preparing and injecting a sample comprising:
(a) a sample preparation compartment (2a) comprising:
(i) a leaktight preparation chamber (3a) having:
- a means (9) for introducing the sample,
- at least one leaktight inlet (13a) and at least one leaktight outlet (10) enabling the circulation of a flushing gas through said preparation chamber (3a);
(ii) a means (4a) of heating said preparation chamber (3a);
(iii) a means (5a) of cooling said preparation chamber (3a);
(iv) a leaktight means for introducing a liquid substance into the preparation chamber (3a) connected to at least one reservoir intended to contain a liquid substance; and
(b) an injection compartment (2b) comprising:
(i) a leaktight focusing chamber (3b) having at least one leaktight inlet (11) connected to the outlet (10) of the preparation chamber (3a) and at least one leaktight outlet (12) enabling the circulation of said flushing gas through said chamber (3b);
(ii) a means (4b) of heating said focusing chamber (3b);
(iii) a means (5b) of cooling said focusing chamber(3b);
(c) a valve (6) located between the outlet (10) of the preparation chamber (3a) and the inlet (11) of the focusing chamber (3b);
(d) means (7) for controlling and means (8) for monitoring the temperature of the preparation chamber (3a) and of the focusing chamber (3b); and
(e) means (15) for controlling and means (16) for monitoring the pressure in the preparation chamber (3a) and in the focusing chamber (3b).

2. Device (1) according to Claim 1, in which the 2 compartments (2a) and (2b) can be separated.

3. Device (1) according to Claim 1 or 2, in which the heating means (4a) and/or (4b) is capable of applying a temperature of 600°C.

4. Device (1) according to any one of Claims 1 to 3, in which the heating means (4a) and/or (4b) is capable of applying a mean heating rate of 10 to 60°C/second.

5. Device (1) according to any one of Claims 1 to 4, in which the cooling means (5a) and/or (5b) is capable of applying a mean cooling rate of 10 to 60°C/second.

6. Device (1) according to any one of Claims 1 to 5, in which the preparation chamber (3a) additionally has a second leaktight outlet (14a) of the flushing gas.

7. Device (1) according to any one of Claims 1 to 6, in which the focusing chamber (3b) additionally has a second leaktight inlet (13b) of the flushing gas and/or a second leaktight outlet (14b) of the flushing gas.

8. Device (1) according to any one of Claims 1 to 7, in which the volume of the enclosure of the chamber (3a) and/or the volume of the enclosure of the chamber (3b) is from 0.5 to 2 ml.

9. Device (1) according to any one of Claims 1 to 8, additionally comprising a means (17) that makes it possible to draw a vacuum or to apply pressure in the preparation chamber (3a) and/or in the focusing chamber (3b).

10. Analysis system comprising a device (1) according to any one of Claims 1 to 9, and at least one analysis instrument (18) connected downstream of said device (1) for preparing and injecting a sample.

11. Analysis system according to Claim 10, in which the analysis instrument is a gas chromatograph (18).

12. Analysis system according to Claim 10 or 11, in which the analysis instrument (18) is a gas chromatograph coupled to a mass spectrometer (19) or to another detector.

13. Analysis system according to any one of Claims 10 to 12, additionally comprising a flushing circuit comprising:
- a flushing gas reservoir (20)
- a line (21) connecting said flushing gas reservoir (20) to the leaktight inlet (13a) of the preparation chamber (3a); and
- a line (22) connecting the outlet (12) of the focusing chamber (3b) to the analysis instrument (18).
